# EUROPEAN PATENT APPLICATION

(11) **EP 4 012 639 A1**
(43) Date of publication of application: **15.06.2022**
(21) Application number: 20851061.0
(22) Date of filing: 26.03.2020
(51) Int. Cl.: G06Q 30/00, G06Q 50/04

(54) **DETERMINATION SYSTEM, DETERMINATION DEVICE, DETERMINATION METHOD, AND DETERMINATION PROGRAM**

(30) Priority: 05.08.2019 US 201962882763 P
(71) Applicant: NHK Spring Co., Ltd., Yokohama-shi, Kanagawa 236-0004 (JP)
(72) Inventor: TAMI, Kenichiro, Yokohama-shi, Kanagawa 236-0004 (JP); IIDA, Naomi, Yokohama-shi, Kanagawa 236-0004 (JP); KINOSHITA, Go, Yokohama-shi, Kanagawa 236-0004 (JP)
(74) Representative: dompatent von Kreisler Selting Werner - Partnerschaft von Patent- und Rechtsanwälten mbB
(86) International application number: PCT/JP2020/013613
(87) International publication number: WO 2021/024545

(57) **Abstract**

A determination system includes a management server configured to determine an object and generate a determination result, a first information communication terminal configured to transmit an identification code and an object information of the object to the management server, and a second information communication terminal configured to transmit the identification code of the object to the management server and receive a determination result. The management server includes a receiving part, a processing part, a storage part, a determination part, and a transmitting part. The receiving part is configured to receive the identification code and the object information. The processing part is configured to associate the identification code transmitted from the first information communication terminal with the object information. The storage part is configured to store the associated identification code and the object information as a database. The determination part is configured to perform a first determination in which the identification code transmitted from the second information communication terminal is collated with the database, perform a second determination in which a parameter included in the object information associated with the collated identification code is compared with a setting condition, and generate the determination result based on the first determination and the second determination. The transmitting part is configured to transmit the determination result to the second information communication terminal.

## Description

### TECHNICAL FIELD

The present invention relates to a determination system for determining an object. Further, the present invention relates to a determination device, a determination method, and a determination program related to the determination system.

### BACKGROUND

Since products manufactured by manufacturers are distributed in the market with a certain quality, users can purchase the products with confidence from the reliable manufacturer. The manufacturers also strive to maintain the quality of their products in order to ensure the trust of the users who purchase them. However, in addition to the products manufactured by the manufacturer (genuine products), inferior products manufactured by other manufacturers (counterfeit products) may be distributed in the market. In this case, the manufacturer is affected not only by damaging the trust of the user but also by reducing the sales of the product (genuine product). Therefore, the manufacturers need to be able to distinguish between genuine products and counterfeit products.

As one of the methods to distinguish between genuine products and imitation products, for example, a determination system is known in which a serial number using a barcode is attached to the genuine product, and the serial number is collated with a distribution channel management database to determine authenticity (see, for example, Patent Literature 1).

### CITATION LIST

### [PATENT LITERATURE]

Patent Literature 1:Japanese Patent Application Laid-Open No. 2007-299179

### SUMMARY OF THE INVENTION

### [TECHNICAL PROBLEM]

In a determination system that simply collates serial numbers, there was a problem with determination accuracy whereby the serial number attached to a genuine product and a forged or duplicated serial number attached to a counterfeit product could not be distinguished.

In view of the above problems, one of the problems of the present invention is to provide a determination system, a determination device, a determination method, and a determination program capable of determining the authenticity of an object with high determination accuracy. Further, one of the problems of the present invention is to provide a determination system, a determination device, a determination method, and a determination program for preventing forgery of an identification label attached to an object.

### [SOLUTION TO PROBLEM]

A determination system according to an embodiment of the present invention includes a management server configured to determine an object and generate a determination result, a first information communication terminal configured to transmit an identification code and an object information of the object to the management server, and a second information communication terminal configured to transmit the identification code of the object to the management server and receive the determination result. The management server includes a receiving part, a processing part, a storage part, a determination part, and a transmitting part. The receiving part is configured to receive the identification code and the object information. The processing part is configured to associate the identification code transmitted from the first information communication terminal with the object information. The storage part is configured to store the associated identification code and the object information as a database. The determination part is configured to perform a first determination in which the identification code transmitted from the second information communication terminal is collated with the database, perform a second determination in which a parameter included in the object information associated with the collated identification code is compared with a setting condition, and generate a determination result based on the first determination and the second determination. The transmitting part is configured to transmit the determination result to the second information communication terminal.

Further, a determination system according to an embodiment of the present invention includes a management server configured to determine an object and generate a determination result and a second information communication terminal configured to transmit an identification code of the object to the management server and receive the determination result. The management server includes a storage part, a determination part, and a transmitting part. The storage part is configured to store the identification code and an object information associated with the identification code as a database. The determination part is configured to perform a first determination in which the identification code transmitted from the second information communication terminal is collated with the database, and perform a second determination in which a parameter included in the object information associated with the collated identification code is compared with a setting condition. The transmitting part is configured to transmit the determination result to the second information communication terminal.

The second information communication terminal may be provided with a reading device to read the identification code. In addition, the reading device may read URL information attached to the object and enables the second information communication terminal to access a determination site.

Further, a determination device according to an embodiment of the present invention includes a receiving part, a storage part, a determination part, and a transmitting part. The receiving part is configured to receive an identification code of an object. The storage part is configured to store the identification code and an object information associated with the identification code as a database. The determination part is configured to perform a first determination in which the received identification code is collated with the database, perform a second determination in which a parameter included in the object information associated with the collated identification code is compared with a setting condition, and generate a determination result based on the first determination and the second determination. The transmitting part is configured to transmit the determination result.

Further, a determination device according to an embodiment of the present invention includes performing a first determination in which an identification code of an object is collated with a database, performing a second determination in which a parameter included in an object information associated with the collated identification code is compared with a setting condition, and generating a determination result based on the first determination and the second determination.

Further, a program according to an embodiment of the present invention is executed by a determination device for determining an object, the program includes performing a first determination in which an identification code of an object is collated with a database, performing a second determination in which a parameter included in an object information associated with the collated identification code is compared with a setting condition, and generating a determination result based on the first determination and the second determination.

The determination result may include a credit rating of the first determination that is calculated based on the second determination.

When a numeral value included in the parameter exceeds a setting condition in the second determination, the determination result including an alert may be generated. The parameter may be one or more selected from a number of determinations, a number of sales, and a period from a sale date.

### BRIEF DESCRIPTION OF THE DRAWINGS

FIG. 1 is a configuration diagram of a determination system according to an embodiment of the present invention.
FIG. 2A is an example of an identification label used in a determination system according to an embodiment of the present invention.
FIG. 2B is an example of an identification label used in a determination system according to an embodiment of the present invention.
FIG. 2C is an example of an identification label used in a determination system according to an embodiment of the present invention.
FIG. 2D is an example of an identification label used in a determination system according to an embodiment of the present invention.
FIG. 3 is a flowchart of a registration process of manufacturing information in a determination system according to an embodiment of the present invention.
FIG.4 is a configuration diagram showing a registration process of reception/shipment information and sales information in a determination system according to an embodiment of the present invention.
FIG. 5 is a configuration diagram showing an association of an object information in an object of a determination system according to an embodiment of the present invention.
FIG. 6 is a flowchart of an inquiry process of a second information communication terminal of a determination system according to an embodiment of the present invention.
FIG. 7 is a flowchart of an inquiry process of a second information communication terminal of a determination system according to an embodiment of the present invention.
FIG. 8 is a flowchart of an inquiry process of a second information communication terminal of a determination system according to an embodiment of the present invention.
FIG. 9 is a flowchart of an inquiry process of a second information communication terminal of a determination system according to an embodiment of the present invention.
FIG. 10 is a flowchart of monitoring a determination status by a second information communication terminal using a determination system according to an embodiment of the present invention.
FIG. 11 is a flowchart of a determination process in a management server of a determination system according to an embodiment of the present invention.
FIG. 12 is a flowchart of a determination process in a management server of a determination system according to an embodiment of the present invention.
FIG. 13 is a flowchart of a determination process in a management server of a determination system according to an embodiment of the present invention.
FIG. 14 is a flowchart of a determination process in a management server of a determination system according to an embodiment of the present invention.
FIG. 15 is a flowchart when determining an object of a determination system according to an embodiment of the present invention.
FIG. 16A is a display screen of a smartphone used in a determination system according to an embodiment of the present invention.
FIG. 16B is a display screen of a smartphone used in a determination system according to an embodiment of the present invention.
FIG. 16C is a display screen of a smartphone used in a determination system according to an embodiment of the present invention.
FIG. 17A is a display screen of a smartphone used in a determination system according to an embodiment of the present invention.
FIG. 17B is a display screen of a smartphone used in a determination system according to an embodiment of the present invention.
FIG. 18A is a display screen of a smartphone used in a determination system according to an embodiment of the present invention.
FIG. 18B is a display screen of a smartphone used in a determination system according to an embodiment of the present invention.
FIG. 19 is a flowchart when determining an object of a determination system according to an embodiment of the present invention.
FIG. 20 is a display screen of a first information communication terminal of a determination system according to an embodiment of the present invention.
FIG. 21 is a display screen of an inquiry process in a second information communication terminal of a determination system according to an embodiment of the present invention.
FIG. 22 is a display screen of an inquiry process in a second information communication terminal of a determination system according to an embodiment of the present invention.
FIG. 23 is an example showing a configuration of a determination system according to an embodiment of the present invention.
FIG. 24 is an example showing a configuration of a determination system according to an embodiment of the present invention.
FIG. 25 is an example showing a configuration of a determination system according to an embodiment of the present invention.
FIG. 26 is an example showing a configuration of a determination system according to an embodiment of the present invention.

### DESCRIPTION OF EMBODIMENTS

Hereinafter, each embodiment of the present invention is described with reference to the drawings. However, the present invention can be implemented in various configurations without departing from the gist thereof, and should not be construed as being limited to the descriptions of the embodiments exemplified below.

For the sake of clarity of the description, although the drawings may be schematically represented with respect to the widths, thicknesses, shapes, and the like of the respective portions in comparison with actual embodiments, the drawings are merely examples and are not intended to limit the interpretation of the present invention. Further, in the present specification and each figure, elements having the same functions as those described for the previously mentioned figures may be designated by the same reference numerals, and duplicate explanations may be omitted.

In the present specification and drawings, the same reference numerals are used when describing the same or a similar plurality of configurations as a whole, and the same reference numerals with an uppercase or lowercase alphabet are used when describing each of the plurality of configurations separately. When describing multiple parts of one composition separately, the same reference numerals with a hyphen and a natural number are used.

In the present specification, the term "database" refers to stored information that is managed as data so that a processing unit can perform processing (for example, add, delete, search of the information, etc.). Further, the "record" is one of the units constituting the database, and includes information for one item to be managed. The information included in the record may include not only one item but also a plurality of items.

In the present specification, the term "object" includes not only a product but also merchandise. Further, the merchandise includes a service.

### <First Embodiment>

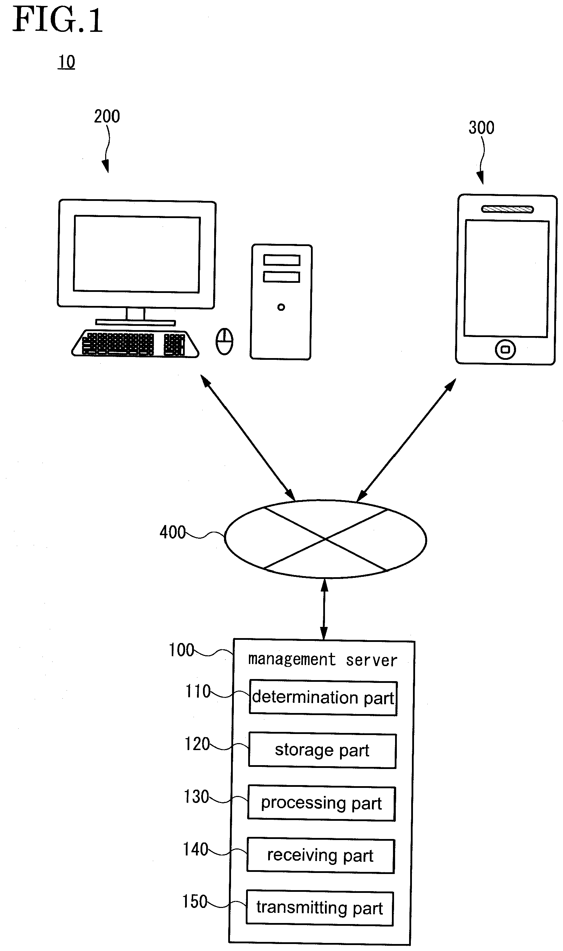

A determination system 10 according to an embodiment of the present invention is described with reference to FIGS. 1 to 14.

### [1. Configuration of Determination System]

FIG. 1 is a configuration diagram of a determination system 10 according to an embodiment of the present invention. As shown in FIG. 1, the determination system 10 includes a management server 100, a first information communication terminal 200, a second information communication terminal 300, and a network 400. The management server 100 and the first information communication terminal 200 communicate and are connected via the network 400. Further, the management server 100 and the second information communication terminal 300 communicate and are connected via the network 400.

The management server 100 can perform a process of associating an identification code 800 attached to an object 700 with an object information 900. Further, the management server 100 can store the identification code 800 and the object information 900 which are associated with each other as a database, and can search the identification code 800 or the object information 900 based on the database. In addition, the management server 100 can perform a determination process of the object 700 based on the identification code 800. That is, the management server 100 can perform the determination process of the object 700 by registering the identification code 800 and the object information 900 as the database and searching the identification code 800 attached to the object 700 in the database. Therefore, the management server 100 can also be said to be a determination device in the determination system 10.

The identification code 800 is attached to each of the objects 700 in order to identify the object 700. For example, the first object 710 is attached with the first identification code 810, and the second object 720 different from the first object 710 is attached with the second identification code 820 different from the first identification code 810. When the identification code is not particularly distinguished in the present specification, it is described as the identification code 800.

The identification code 800 may be directly attached to the object 700 or indirectly attached to the object 700. An example of indirectly attaching the identification code 800 to the object 700 is where the identification code 800 is attached to a package of the object 700, or where the identification code 800 is provided on the identification label 500 and the identification label 500 is attached to the object 700, but not limited to these examples. The identification code 800 may be attached in a manner capable of identifying the object 700.

In the present specification, the description of attaching the identification code 800 to the object 700 includes the case where the identification code 800 is directly attached to the object 700 and the case where the identification code 800 is indirectly attached to the object 700 via the package or the identification label 500.

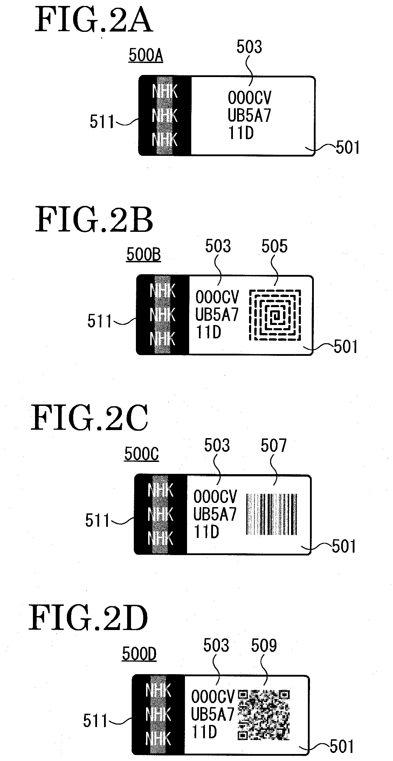

Hereinafter, the identification label 500 is described with reference to FIGS. 2A to 2D. FIGS. 2A to 2D are examples of the identification label 500 used in the determination system 10 according to the embodiment of the present invention.

In an identification label 500A shown in FIG. 2A, a character string 503 is formed on a sheet 501. For example, paper, film, glass, or the like can be used for the sheet 501. Although the character string 503 can be characters in which numbers or alphabets are combined, the composition of the character string 503 is not limited to this. The character string 503 may be a combination of Japanese characters such as hiragana, katakana, or kanji, foreign language characters, symbols, or color codes. Further, the character string 503 may be printed on the sheet 501, or may be formed in an uneven shape by using a mold or the like.

When the character string 503 is formed by printing, a letterpress method, a lithographic method, an intaglio method, a stencil method, an electrophotographic method, an inkjet method, a laser method, or the like can be used as the printing method, for example, but the printing method is not limited to these methods. Further, when printing the character string 503, although typographic ink, flat plate ink, screen ink, heat-curable ink, ultraviolet curable ink, magnetic ink, UV fluorescent ink and the like can be used, the printing is not limited to this ink.

The identification label 500A can also further be formed with an optical portion 511 such as a watermark, hologram, or trustgram (registered trademark).

The identification label 500A may be provided with a protective layer or may be laminated in order to protect the portion of the character string 503. Further, in order to attach the identification label 500A to the object 700, an adhesive may be formed on the back surface of the identification label 500A (the surface opposite to the surface on which the character string 503 is formed).

In the determination system 10, the character string 503 of the identification label 500 can be used for the identification code 800. That is, the character string 503 can be used for the identification code 800 assigned to each of the objects 700. The identification code 800 may be randomly generated or may be serially generated. The identification code 800 is assigned a different character for each object 700 so that each of the plurality of objects 700 can be identified. Further, although the character string 503 shown in FIG. 2A is shown as a 13-digit character, the number of digits of the identification code 800 is not limited to this. The number of digits of the identification code 800 can be appropriately determined according to the number of manufactured objects 700 or the like.

Further, the character string 503 may include not only the identification code 800 of the object 700 but also a URL of the determination site for determining the object 700. By including the URL in the character string 503, it is possible to access the determination site at the same time as reading the identification code 800 of the object 700 by using, for example, an OCR (Optical Character Recognition) reader.

In an identification label 500B shown in FIG. 2B, an RFID (Radio Frequency Identifier) 505 is formed in addition to the character string 503. The RFID 505 includes the same identification code 800 as the character string 503. Therefore, in the identification label 500B, the identification code 800 can be read from the RFID 505 using a reading device such as an RFID reader. Further, the RFID 505 can also include the URL of the determination site for determining the object 700 by communicating with the management server 100. By including the URL of the determination site in the RFID 505, it is possible to access the determination site at the same time as reading the RFID 505.

An identification label 500C shown in FIG. 2C has a barcode 507 formed in addition to the character string 503. The barcode 507 includes the same identification code 800 as the character string 503. Therefore, in the identification label 500C, the identification code 800 can be read from the barcode 507 by using a reading device such as a barcode reader. Further, the barcode 507 may include the URL of the determination site for communicating with the management server 100 and determining the object 700. By including the URL of the determination site in the barcode 507, it is possible to access the determination site at the same time as reading the barcode 507.

In an identification label 500D shown in FIG. 2D, a QR code (registered trademark) (Quick Response Code) 509 is formed in addition to the character string 503. The QR code 509 includes the same identification code 800 as the character string 503. Therefore, in the identification label 500D, the identification code 800 can be read from the QR code 509 by using a reading device such as a QR code reader. Further, the QR code 509 may include the URL of the determination site for communicating with the management server 100 and determining the object 700. By including the URL of the determination site in the QR code 509, it is possible to access the determination site at the same time as reading the QR code 509.

Although a configuration using the QR code 509 is described in FIG. 2D, the configuration is not limited to the QR code, and any two-dimensional bar code can be used.

Since the identification labels 500B, 500C, and 500D each include the same identification code 800 as the character string 503 in the RFID 505, the barcode 507, and the QR code 509, the identification labels 500B, 500C, and 500D may have a configuration in which the character string 503 is not formed.

In FIGS. 2A to 2D, although the identification labels 500A to 500D are exemplified as the identification label 500, the configuration of the identification label 500 is not limited to this label. The identification label 500 may be attached to each of the plurality of objects 700 and may include the identification code 800 capable of identifying each of the plurality of objects 700.

Returning to FIG. 1, the management server 100 is again described. The management server 100 includes a determination part 110, a storage part 120, a processing part 130, a receiving part 140, and a transmitting part 150.

For example, the management server 100 is a computer. Further, the management server 100 may be one computer or a plurality of computers. The management server 100 can include electronic devices such as an MPU (Micro Processing Part), a CPU (Central Processing Part), a GPU (Graphics Processing Part), a ROM (Read Only Memory), a RAM (Random Access Memory), a RAM (Random Access Memory), and an HDD (Hard Disc Drive), an SSD (Solid State Drive), a DRAM (Dynamic Random Access Memory), a NAND flash memory, or a NOR flash memory.

The receiving part 140 can receive the identification code 800 or the object information 900 from the first information communication terminal 200. The processing part 130 can perform a process for associating the identification code 800 with the object information 900. Further, the processing part 130 can generate information related to the number of determinations by counting the number of times the identification code 800 is received. Further, the processing part 130 can also generate information related to a country of an access source by analyzing an IP address of the access source to the management server 100. Information regarding the number of determinations or information related to the country of the access source is also included in the object information 900. Therefore, the processing part 130 can not only perform a process of associating the identification code 800 with the received object information 900, but can also perform a process of associating the identification code 800 with the generated object information 900. The storage part 120 can store the identification code 800 and the object information 900. The storage part 120 can also store this information as a database. The determination part 110 can perform a determination process according to a predetermined determination condition and generate a determination result. The transmission part 150 can transmit the determination result to the second information communication terminal 300.

In the determination system 10, the object 700 can be identified and determined by using the identification code 800. As described above, not only the identification code 800 but also various object information 900 related to the object 700 is registered in the management server 100. Therefore, the determination of the object 700 in the determination system 10 includes not only the authenticity determination of the object 700 but also the acquisition of information related to the object 700 such as the identification of the object information 900 of the object 700.

Subsequently, the first information communication terminal 200 and the second information communication terminal 300 are described.

For example, a stationary information communication terminal such as a personal computer or a mobile information communication terminal such as a mobile phone, a tablet, or a smartphone can be used as the first information communication terminal 200 and the second information communication terminal 300. Further, the first information communication terminal 200 and the second information communication terminal 300 can include a reader of the identification code 800, for example, a camera, an OCR reader, a barcode reader, a QR code reader, or the like.

In the determination system 10, the identification code 800 and the object information 900 attached to the object 700 can be registered in the management server 100 by using the first information communication terminal 200. Specifically, the identification code 800 and the object information 900 are input to the first information communication terminal 200, or the first information communication terminal 200 reads the identification code 800 attached to the object 700. The first information communication terminal 200 transmits the identification code 800 and the object information 900 to the management server 100 via the network 400. The identification code 800 and the object information 900 which are transmitted are associated with each other by the processing part 130 of the management server 100 and stored in the storage part 120.

The first information communication terminal 200 may be a plurality of stationary information communication terminals or mobile information communication terminals. For example, the first stationary information communication terminal can be used to read the identification code 800 attached to the object 700, and the second stationary information different from the first stationary information communication terminal can be used to input the object information 900 of the object 700.

In the determination system 10, the second information communication terminal 300 can be used to determine the object 700 based on the identification code 800. Specifically, the identification code 800 is input to the second information communication terminal 300, or the second information communication terminal 300 reads the identification code 800. The second information communication terminal 300 transmits the identification code 800 to the management server 100 via the network 400. After the determination process is performed by the management server 100, the second information communication terminal 300 can receive the determination result and display the determination result on the screen of the second information communication terminal 300.

The second information communication terminal 300 may be a plurality of stationary information communication terminals or mobile information communication terminals. For example, the first user who purchased the object 700 can use the mobile information communication terminal to determine the authenticity of the object 700 with the identification code 800, or the second user (for example, the manufacturer) who manufactured the object 700 can use the stationary information communication terminal to monitor the object 700 or the information code 800.

For example, the network 400 is an intranet or the Internet, and the type of network can be changed depending on the installation location of the management server 100, the first information communication terminal 200, and the second information communication terminal 300. For example, when the management server 100 is installed in the management company, the first information communication terminal 200 is installed in the manufacturer of the object 700, and the second information communication terminal 300 is installed in the user who purchased the object 700, the network 400 may communicate and connect each information communication terminal using the Internet. Further, when the management server 100 and the first information communication terminal 200 are installed at the manufacturer and the second information communication terminal 300 is installed at the user who purchased the object 700, the network 400 can communicate and connect the management server 100 with the first information communication using the Internet and can communicate and connect the management server 100 with the second communication information terminal 300 using the intranet.

Although the configuration of the determination system 10 according to the present embodiment has been described above, the configuration of the determination system 10 is not limited to this configuration. The determination system 10 may be configured to include the management server 100 and not include the first information communication terminal 200 and the second information communication terminal 300. Further, the determination system 10 may be configured to include the management server 100 and the first information communication terminal 200, and not include the second information communication terminal 300. If the management server 100 is included in the determination system 10, it is possible to perform the determination process of the object 700 after performing the registration process of the identification code 800 attached to the object 700 and provide the determination result.

Further, the determination system 10 can be configured to include the first information communication terminal 200 and not include the management server 100 and the second information communication terminal 300. It is possible to perform the registration process of the identification code 800 of the object 700 by using a program installed in the first information communication terminal 200 and operating on the first information communication terminal 200. Furthermore, the determination system 10 may be configured to include the second information communication terminal 300 and not include the management server 100 and the first information communication terminal 200. It is possible to receive the object information or the determination result of the object 700 by using a program installed in the second information communication terminal 300 and operating on the second information communication terminal 300.

The determination system 10 can perform the registration process of the identification code 800 and the object information 900, and the determination process based on the identification code 800. The registration process is mainly performed by using the management server 100 and the first information and communication terminal 200, and the determination process is performed by using the management server 100 and the second information communication terminal 300. Hereinafter, the configuration of the determination system 10 is described in more detail by dividing the processes into the registration process and the determination process.

### [2. Registration Process]

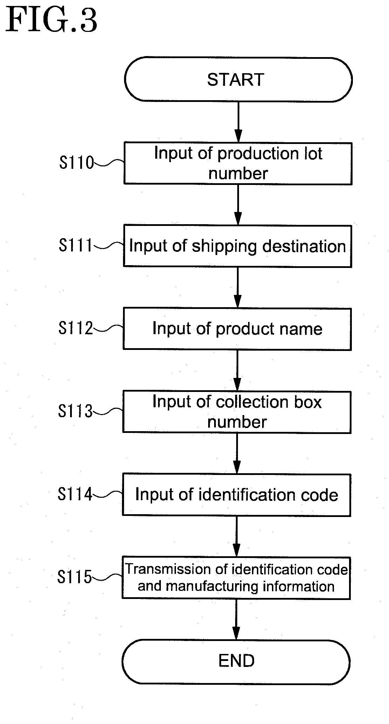

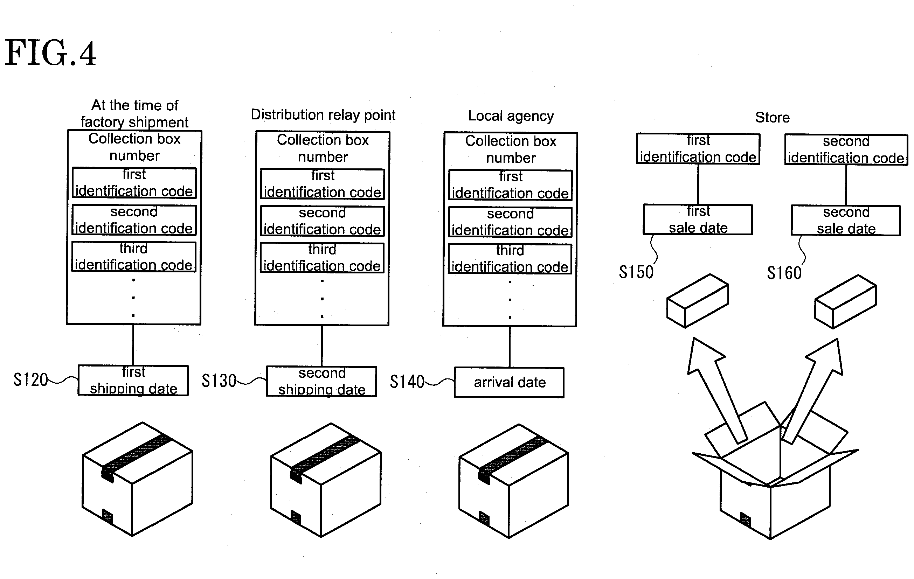

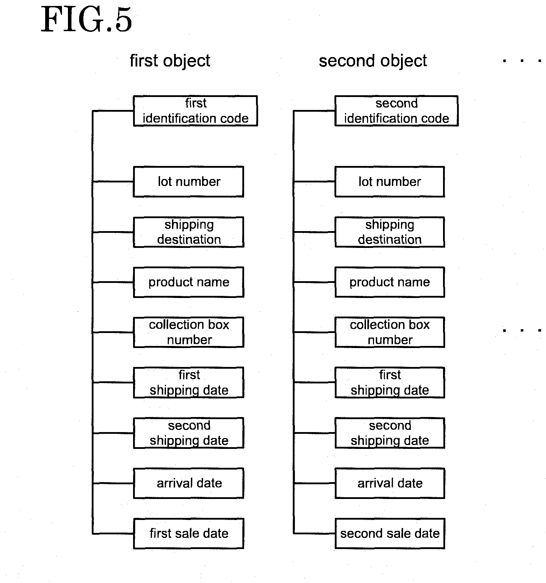

The object information 900 of the object 700 can include various information. For example, the object information 900 may include manufacturing information in a manufacturing process of the object 700, reception/shipment information in a distribution process of the object 700, and sales information in a selling process of the object 700, or the like. Therefore, in the following description, the registration process of manufacturing information is described with reference to FIG. 3. In addition, the registration process of reception/shipment information and sales information is described with reference to FIGS. 4 and 5.

FIG. 3 is a flowchart of a registration process of manufacturing information in the determination system 10 according to the embodiment of the present invention. Specifically, FIG. 3 is a flowchart of a registration process for registering manufacturing information of the object 700 using the first information communication terminal 200 installed in a factory where the object 700 is manufactured.

In the manufacturing process shown in FIG. 3, after manufacturing of the object 700 is completed, a production lot number of the object 700 is input to the first information communication terminal 200 (step S110). Further, in order to distribute and sell the object 700, a shipping destination of the object 700 is input (step S111), a product name of the object 700 is input (step S112), and a collection box number of a collection box for packing the object 700 is input (step S113). Further, when the object 700 is packed in a collection box, the identification code 800 of the object 700 is input to the first information communication terminal 200 (step S114). The production lot number, the shipping destination, the product name, and the collection box number, and the identification code 800 for manufacturing information included in the object information 900 are transmitted from the first information communication terminal 200 to the management server 100 via the network 400 (step S115). Further, in the management server 100, the identification code 800 and the manufacturing information are associated and registered. Specifically, in the management server 100, the processing part 130 associates the identification code 800 with the manufacturing information, and the associated information is stored in the storage part 120. The manufacturing information is not limited to the above. For example, the manufacturing information may include a color, a material, a shape, a size, a weight, a model number, or inspection information of the object 700, or a photograph of the object 700.

In the first information communication terminal 200, the order of inputting the manufacturing information and the identification code 800 is not limited to the flowchart shown in FIG. 3. The input order can be changed as appropriate. Further, the manufacturing information and the identification code 800 can be input in each of the manufacturing processes, or can be collectively input after the object 700 is completed.

FIG. 4 is a configuration diagram showing a registration process of reception/shipment information and sales information in the determination system 10 according to the embodiment of the present invention. In FIG. 4, reception/shipment information is registered at the time of factory shipment in the distribution process, at the distribution relay point, and at the local agency. In addition, sales information is registered at the store in the sales process.

In the distribution process, since a plurality of objects 700 are packed in collection boxes and distributed in units of collection boxes, reception/shipment information can be registered for the collection box number. That is, a first information communication terminal 200 is installed at each base of the distribution process, and reception/shipment information is input using the first information communication terminal 200. Specifically, at the time of shipment from the factory, the collection box number is read, and the first shipping date is input for the read collection box number (step S120). At the distribution relay point, the collection box number is read, and the second shipping date is input for the read collection box number (step S130). The local agency reads the collection box number and inputs the arrival date for the read collection box number (step S140). The input first shipping date, the second shipping date, and the arrival date are transmitted to the management server 100 and registered in the management server 100.

On the other hand, in the selling process, the object 700 is taken out from the collection box at the store and each object 700 is sold. When the first object 710 is sold, the first information communication terminal 200 is used to read the first identification code 810 attached to the first object 710, and the first sale date is input for the read first identification code 810 (step S150). When the second object 720 is sold, the first information communication terminal 200 is used to read the second identification code 820 attached to the second object 720, and the second sale date is input for the read second identification code 820 (step S160). The sales information is not limited to the sale date of the object 700. For example, the sales information may include information related to a user who purchases the object 700.

The association between the identification code 800 and the object information 900 (manufacturing information, reception/shipment information, and sales information) is as shown in FIG. 5.

FIG. 5 is a configuration diagram showing the association of the object information 900 in the object 700 of the determination system 10 according to the embodiment of the present invention. In the distribution process, although the first shipping date, the second shipping date, and the arrival date are associated with the collection box number, since the same collection box number is registered for the first object 710 and the second object 720, after all, each of the first identification code 810 attached to the first object 710 and the second identification code 820 attached to the second object 720 is associated with reception/shipment information including the first shipping date, the second shipping date, and the arrival date. On the other hand, in the sales process, the first object 710 and the second object 720 are sold individually. Therefore, the first shipping date is associated with the first identification code 810 attached to the first object 710 and the second shipping date is associated with the second identification code 820 attached to the second object 720.

As described above, the registration process of the determination system 10 is described by dividing the object information 900 into manufacturing information in the manufacturing process, reception/shipment information in the distribution process, and sales information in the sales process. The determination system 10 can be used by registering the identification code 800 in any of the processes. For example, the identification code 800 can be registered in the distribution process or the sales process instead of the manufacturing process. Specifically, the identification code 800 of the object 700 to be sold can be registered in the management server by using the first information communication terminal 200 of the store. If the identification code 800 is registered in a sales process such as a pawn shop or an auction transaction, it is possible to guarantee that the object 700 is a genuine product by using the determination system 10.

### [3. Determination Process]

The determination process of the object 700 to which the determination system 10 is applied includes an inquiry process in the second information communication terminal 300 and a determination process in the management server 100. In the inquiry process, the identification code 800 of the object 700 is input, and the determination result of the object 700 is output. In the determination process, it is determined whether or not the object 700 satisfies a predetermined determination condition based on the identification code 800 of the object 700, and a determination result is generated. Hereinafter, each of the inquiry process in the second information communication terminal 300 and the determination process in the management server 100 is described.

### [3-1. Inquiry Process in Second Information Communication Terminal]

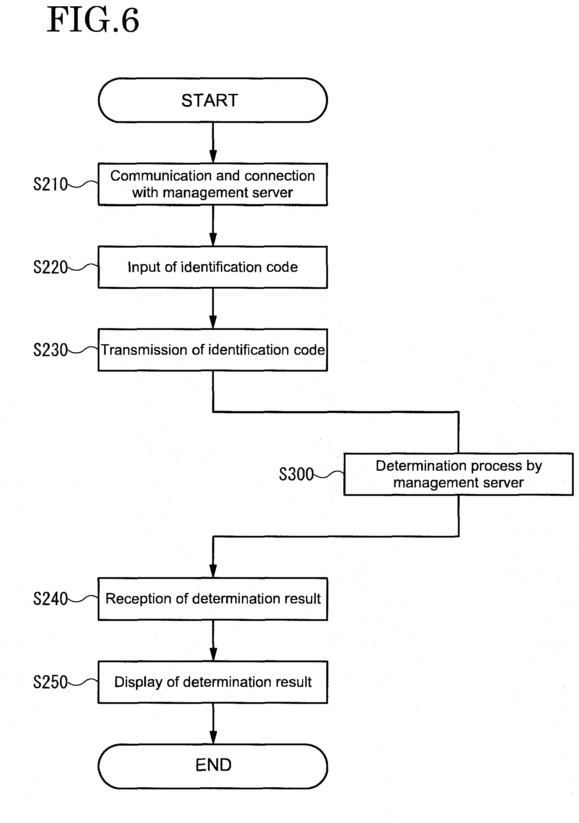

FIG. 6 is a flowchart of the inquiry process in the second information communication terminal 300 of the determination system 10 according to the embodiment of the present invention.

First, the second information communication terminal 300 communicates and connects with the management server 100 via the network 400 (step S210). For example, in the second information communication terminal, the URL of the determination site on which the determination process is performed by the management server 100 is input, so that the second information communication terminal 300 can communicate and connect with the management server 100.

Next, in the second information communication terminal 300, the identification code 800 of the object 700 is input (step S220). The identification code 800 may be directly input by a user to the second information communication terminal 300, or the identification code 800 may be read by a reading device so that the read identification code 800 is automatically input. For example, a bar code reader, a QR code reader, an OCR code reader, or the like can be used as the reading device, but the reading device is not limited to these. Although the identification code 800 can be read by the second information communication terminal 300 in the same manner as the identification code 800 by the first information communication terminal 200, the reading method is not limited to this, and other reading methods can also be used.

Next, the input identification code 800 is transmitted to the management server 100 via the network 400 (step S230). The management server 100 performs the determination process of the object 700 based on the transmitted identification code 800 (step S300). The determination process on the management server 100 is described later.

Next, the second information communication terminal 300 receives the determination result of the object 700 from the management server 100 via the network 400 (step S240).

Next, the second information communication terminal 300 displays the determination result of the object 700 on the screen (step S250). Therefore, the user can confirm the determination result of the object 700 by looking at the screen of the second information communication terminal 300. The determination result can include not only the authenticity determination of the object 700 but also the object information 900. As a result, the user can directly determine the authenticity of the object 700 based on the object information 900 as well as the determination result of the determination site.

### [3-1-1. Modification 1 of Inquiry Process in Second Information Communication Terminal]

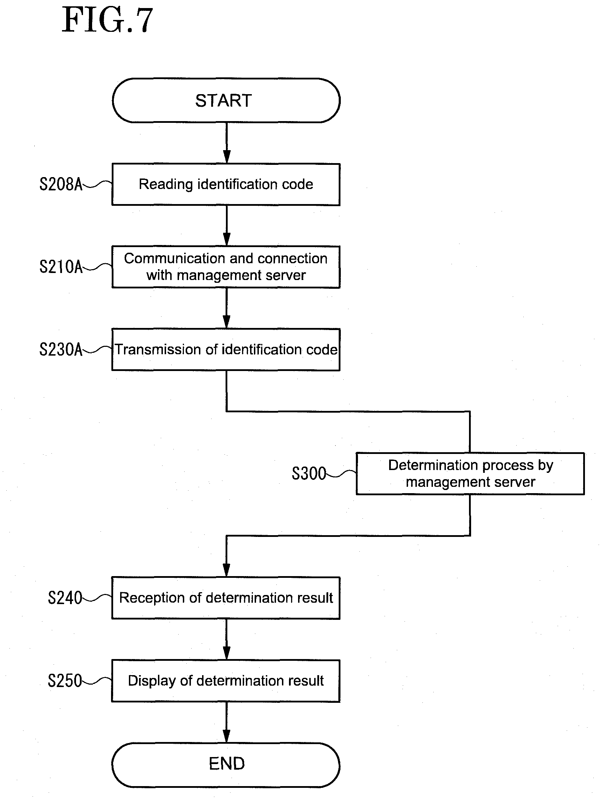

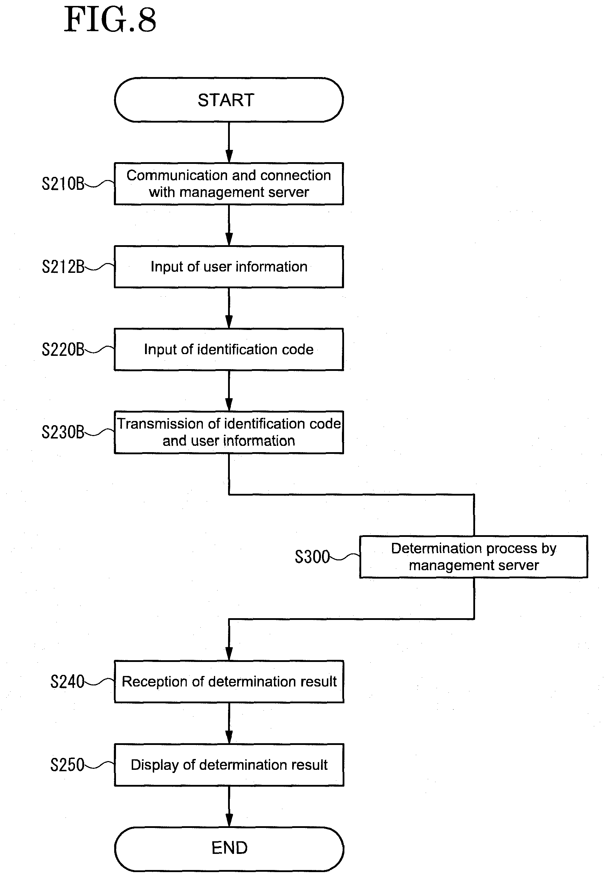

FIG. 7 is a flowchart of another inquiry process of the second information communication terminal 300 in the determination of the object 700 using the determination system 10 according to the embodiment of the present invention. Specifically, the flowchart shown in FIG. 8 is an example of an inquiry process when the identification label 500 includes not only the identification code 800 but also the URL information of the determination site where the determination process of the management server 100 is performed.

First, the user reads the identification code 800 and the URL information from the identification label 500 using the reading device of the second information communication terminal 300 (step S208A). Next, the second information communication terminal 300 communicates and connects with the management server 100 via the network 400 based on the read URL information (step S210A). Further, the second information communication terminal 300 transmits the read identification code 800 to the management server 100 (step S230A). In steps S210A and S230A, the read identification code 800 and URL information may be displayed on the screen of the second information communication terminal 300, and each step may be performed after the user permits it. Since the steps after step S230A are the same as the steps of the flowchart shown in FIG. 6, the description thereof is omitted here.

In the process shown in FIG. 7, since the user does not need to directly input the identification code 800 and the URL information, the object 700 can be easily determined.

### [3-1-2. Modification 2 of Inquiry Process in Second Information Communication Terminal]

FIG. 8 is a flowchart of another inquiry process of the second information communication terminal 300 in the determination of the object 700 using the determination system 10 according to the embodiment of the present invention. Specifically, the flowchart shown in FIG. 8 is an example of an inquiry process in which user information is input before the second information communication terminal 300 transmits the identification code 800.

First, the second information communication terminal 300 communicates and connects with the management server 100 via the network 400 (step S210B).

Next, the user information is input in the second information communication terminal 300. For example, the user information includes a user name, an email address, a telephone number, or an address.

Next, in the second information communication terminal 300, the identification code 800 of the object 700 is input (step S220). The identification code 800 may be directly input by the user to the second information communication terminal 300, or the identification code 800 may be read by a reading device so that the read identification code 800 is automatically input. The identification code 800 can be read by the second information communication terminal 300 in the same manner as the identification code 800 by the first information communication terminal 200. Further, the second information communication terminal 300 transmits the read identification code 800 and the input user information to the management server 100 (step S230B). Since the steps after step S230B are the same as the steps of the flowchart shown in FIG. 6, the description thereof is omitted here.

In the process shown in FIG. 8, since the user needs to input the user information, it is possible to prevent the unnecessary determination of the object 700. Since it is possible to suppress an abnormal increase in the number of determinations, a significant difference can be found between the number of determinations increased by the duplicated identification label 500 or identification code 800.

### [3-1-3. Modification 3 of Inquiry Process in Second Information Communication Terminal]

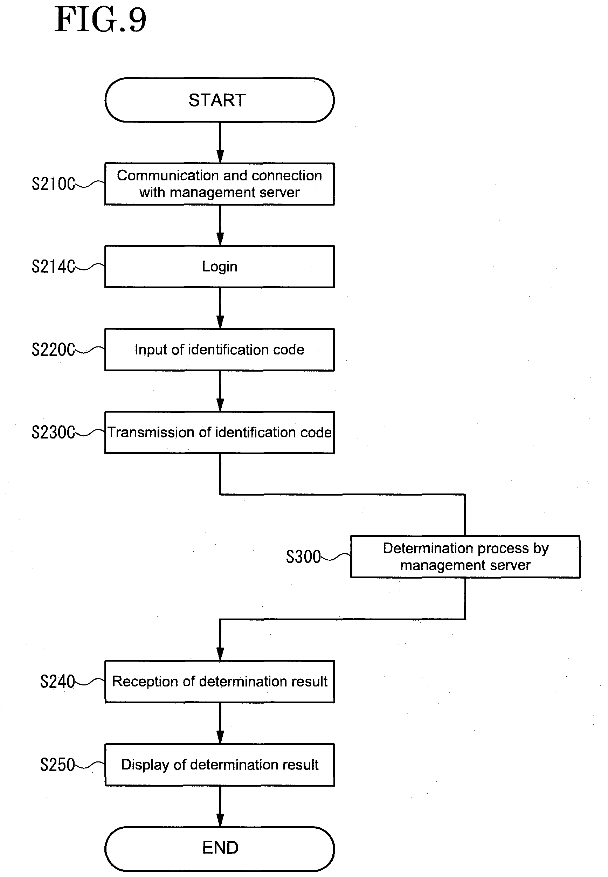

FIG. 9 is a flowchart of another inquiry process of the second information communication terminal 300 in the determination of the object 700 using the determination system 10 according to the embodiment of the present invention. Specifically, the flowchart shown in FIG. 9 is an example of an inquiry process when the second information communication terminal 300 needs to login in order to use the determination site of the management server 100.

First, when the second information communication terminal 300 communicates and connects with the management server 100 via the network 400 (step S210C), a login screen for accessing the determination site is displayed on the screen of the second information communication terminal 300. The user can access the determination site by entering an account or password (step S214C). Next, in the second information communication terminal 300, the identification code 800 of the object 700 is input (step S220C), and the input identification code 800 is transmitted to the management server 100 via the network 400 (step S230C). Since the steps after step S230C are the same as the steps of the flowchart shown in FIG. 6, the description thereof is omitted here.

In the process shown in FIG. 9, it is possible to limit users who can access the determination site. Therefore, the access destination is clarified, and it is possible to suppress an abnormal increase in the number of determinations of the object 700.

### [3-2. Monitoring Determination Status by Second Information Communication Terminal]

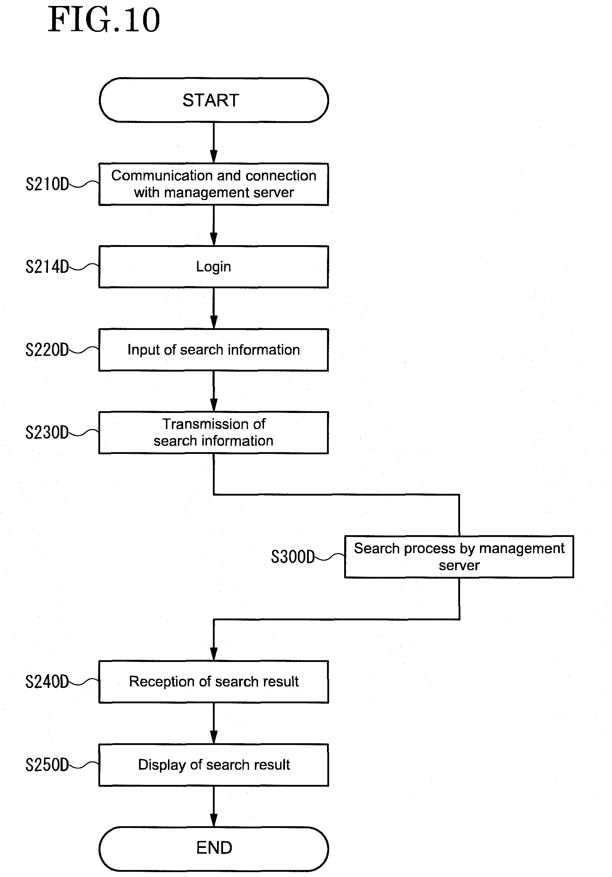

FIG. 10 is a flowchart of monitoring a determination status by the second information communication terminal 300 using the determination system 10 according to the embodiment of the present invention. In the determination system 10, not only the user performs the determination process of the object 700 using the determination site, but also the manufacturer of the object 700 can monitor the determination status of the user.

.

First, when the second information communication terminal 300 communicates and connects with the management server 100 via the network 400 (step S210D), a login screen for accessing the management server 100 is displayed on the screen of the second information communication terminal 300. The user can access the management server 100 by inputting an account or password (step S214D). Next, in the second information communication terminal 300, search information is input (step S220D), and the input search information is transmitted to the management server 100 via the network 400 (step S230D).

The search information including, for example, information related to the user, information regarding the object 700, or information related to the identification code 800 can be searched by the determination system 10. The information related to the user is specifically information about the user who accessed the determination site, for example, an account or an access country. The number of accesses to the determination site can also be used for the search information. Further, the information related to the object 700 is a production lot number, a shipping destination, a product name, or the like. Furthermore, the information related to the identification code 800 may be the identification code 800, and the identification code 800 having a large number of determinations may be used for the search information.

Subsequently, the management server 100 performs a search process based on the transmitted search information (step 300D), and generates a search result. The search process by the management server 100 is performed using the database stored in the storage part 120.

Next, the second information communication terminal 300 receives the search result from the management server 100 via the network (step S240D). The second information communication terminal 300 displays the search result on the screen (step S250D).

In the process shown in FIG. 10, the determination status can be confirmed through the determination result. For example, from the determination result, information such as that the determination site is frequently accessed from the same account or that the same identification code is determined frequently from an unspecified number of accounts can be obtained. Therefore, by monitoring the determination information using the second information communication terminal 300, it is possible to identify the identification code that may be duplicated.

### [3-3. Determination Process on the Management Server]

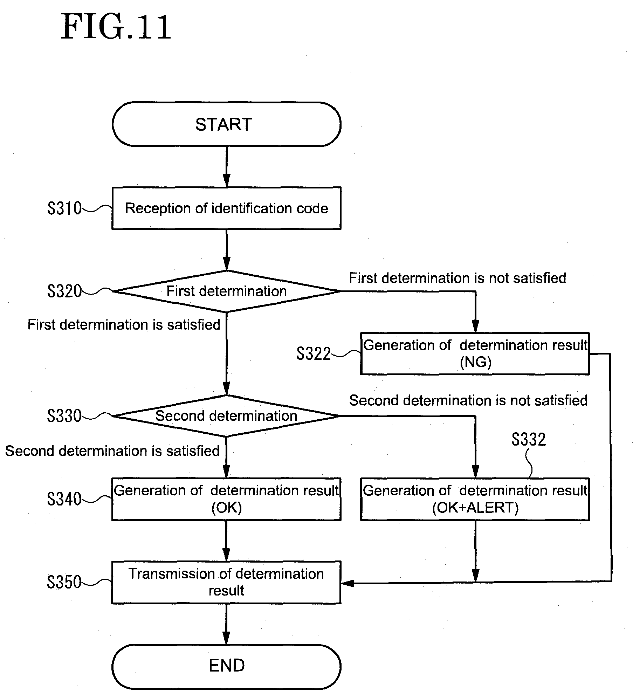

FIG. 11 is a flowchart of the determination process in the management server 100 of the determination system 10 according to the embodiment of the present invention.

First, the receiving part 140 of the management server 100 receives the identification code 800 transmitted by the second information communication terminal 300 (step S310). Next, the determination part 110 performs a first determination as to whether or not the first condition is satisfied (step S320). The first condition is preferably a condition relating to the identification code 800. For example, the first condition can be that the transmitted identification code 800 is stored in the storage part 120. In this case, the determination part 110 searches the storage part 120 and determines whether or not the identification code 800 transmitted to the storage part 120 is stored. That is, the determination part 110 collates the transmitted identification code 800 with the database stored in the storage part 120. When the transmitted identification code 800 is stored in the storage part 120, the first condition is satisfied, and the process proceeds to the next step S330. On the other hand, when the transmitted identification code 800 is not stored in the storage part 120, the first condition is not satisfied, and the determination part 110 generates a determination result that the determination is NG (step S322).

Next, the determination part 110 performs a second determination as to whether or not the second condition is satisfied (step S330). The second condition is a preset setting condition used in the determination. The second condition is preferably a condition using a specific numerical value of the parameter included in the object information 900. For example, the number of determinations of the object 700 may be the numerical value of the parameter of the object information 900, and the second condition may be a condition that the number of determinations is equal to or less than the set value. In this case, the determination part 110 searches the storage part 120, and searches for the number of determinations from the transmitted database record of the identification code 800. Further, the determination part 110 determines whether or not the number of determinations is equal to or less than the set value of the second condition. When the number of determinations is less than or equal to the set value, the second condition is satisfied, and the determination part generates a determination result that the determination is OK (step S340). On the other hand, when the number of determinations is larger than the set value, the second condition is not satisfied, and the determination part 110 generates a determination result that the determination is OK, including an alert requiring attention (step S332).

The second condition of the second determination may be a non-numerical condition. For example, the second condition may be a condition including a parameter included in the object information 900 such as whether or not the object 700 is shipped, whether or not the object is sold, or the sales area or the latest determination country. In this case, in the second determination, the parameter can be searched from the database record of the transmitted identification code 800, and it can be determined whether or not the parameter satisfies the second condition. When the parameter satisfies the second condition, the determination part 110 generates a determination result that the determination is OK. On the other hand, when the parameter does not satisfy the second condition, the determination part 110 generates a determination result that the determination is OK, including an alert requiring attention.

Further, the determination result may include a credit rating of the first determination calculated based on the determination in the second determination. The second determination is performed based on the parameters of the object information 900 obtained based on the first determination. Therefore, the parameter can be an index of the credit rating of the first determination. The credit rating of the first determination is not particularly limited, but may be expressed by a value such as a percentage (%). That is, if the first determination is credible, the credit rating is 100 (%) at the maximum, and if the first determination is non-credible, the credit rating is 0 (%) at the minimum. Further, the credit rating of the first determination may be expressed by determination criteria such as A, B, and C. For example, if the first determination is credible, the credit rating can be determined as A, and if the first determination is non-credible, the credit rating can be determined as C.

When calculating the credit rating, a predetermined value may be assigned in advance to the numerical range of the parameter. For example, in the case where the parameter is the number of determinations, when the set value is 5, the credit rating can be 100 (%) for 0 to 5 determinations, 75 (%) for 6 to 10 determinations, 50 (%) for 11 to 20 determinations, 25 (%) for 21 to 50 determinations, and 0 (%) for 51 determinations or more.

In the second determination, the determination may be performed using not only one parameter but also a plurality of parameters. In that case, the credit rating of the first determination can be calculated in consideration of a plurality of parameters. For example, a value can be calculated for each parameter, and the average value of those values can be used as the credit rating of the first determination. Further, the value obtained by multiplying the value for each parameter can be used as the credit rating of the first determination. In this case, a weight may be set for each parameter, and the credit rating of the first determination may be calculated in consideration of the weight. For example, it is possible to set a large weight of a parameter by which it is easy to determine that a product is not genuine.

The credit rating of the first determination may be included in the alert. That is, in the second determination, the credit rating of the first determination may be calculated when the second condition is not satisfied.

By including the credit rating of the first determination in the determination result, the determination accuracy can be visualized.

Next, the transmitting part 150 transmits the determination result to the second information communication terminal 300 (step S350).

Although the determination process in the management server is described above, the determination performed by the management server is not limited to the first determination and the second determination. It is preferable that the management server 100 performs at least two or more determination processes, and one of the determination processes includes a condition in which a specific numerical value of the parameter included in the object information 900 is used. By performing such a determination process, it is possible to detect the determination by the duplicated identification label 500 or identification code 800 and determine the object 700 with high determination accuracy.

Various numerical values can be selected as the parameter of the second condition. The set value of the second condition includes, for example, the number of determinations, the number of sales, or the period from the sale date. Further, a specific numerical value or an average value between the same lots can be set as the set value. Hereinafter, some modifications in which the second condition of the second determination is different are described.

### [3-3-1. Modification 1 of Determination Process in Management Server]

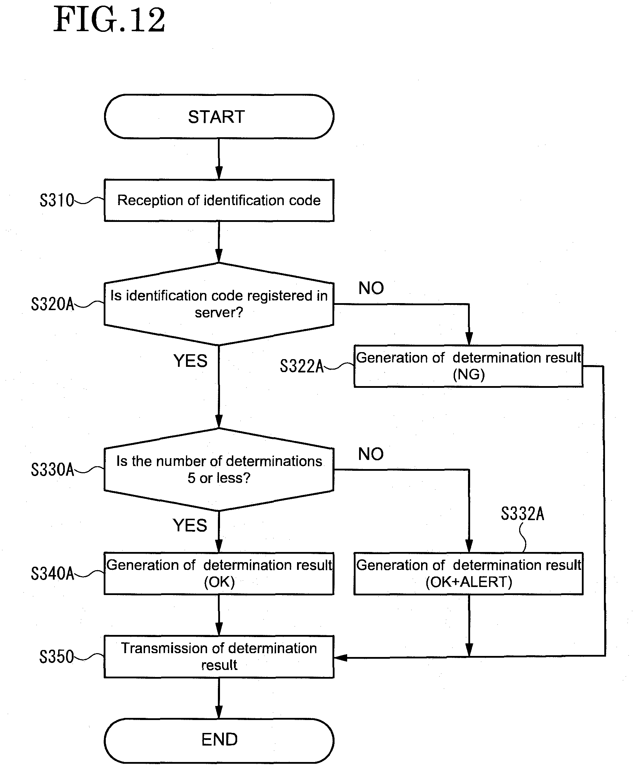

FIG. 12 is a flowchart of a determination process in the management server 100 of the determination system according to the embodiment of the present invention. In FIG. 12, the first condition and the second condition are embodied with the first condition being that the received identification code 800 is registered, and the second condition being that the number of determinations is 5 or less.

First, the receiving part 140 of the management server 100 receives the identification code 800 transmitted by the second information communication terminal 300 (step S310). Next, the determination part 110 searches the storage part 120 and performs a first determination as to whether or not the identification code 800 is registered (step S320A). That is, the determination part 110 collates the received identification code 800 with the database stored in the storage part 120. When the identification code 800 is not registered, the determination part 110 generates a determination result (determination result NG) indicating that the identification code 800 is not registered (step S322A). On the other hand, when the identification code 800 is registered, the determination part 110 searches the storage part 120 for the number of determinations, and performs a second determination as to whether or not the number of determinations is 5 or less (step S330A). When the number of determinations is 5 or less, the determination part 110 generates a determination result (determination result OK) indicating that the identification code 800 is registered (step S340A). When the number of determinations is more than 5, the determination part 110 generates a determination result (determination result OK + alert) indicating that the identification code 800 is registered and that the number of determinations is large (step S332A). The transmitting part 150 transmits the determination result to the second information communication terminal 300.

If the number of determinations is abnormally large, it is highly possible that the determination is repeated with a duplicated identification label 500 or identification code 800. The determination system 10 can detect the determination by the duplicated identification label 500 or identification code 800 by comparing the specific numerical values of the parameters included in the object information 900, and perform the determination of the object 700 with high determination accuracy.

### [3-3-2. Modification 2 of Determination Process in Management Server]

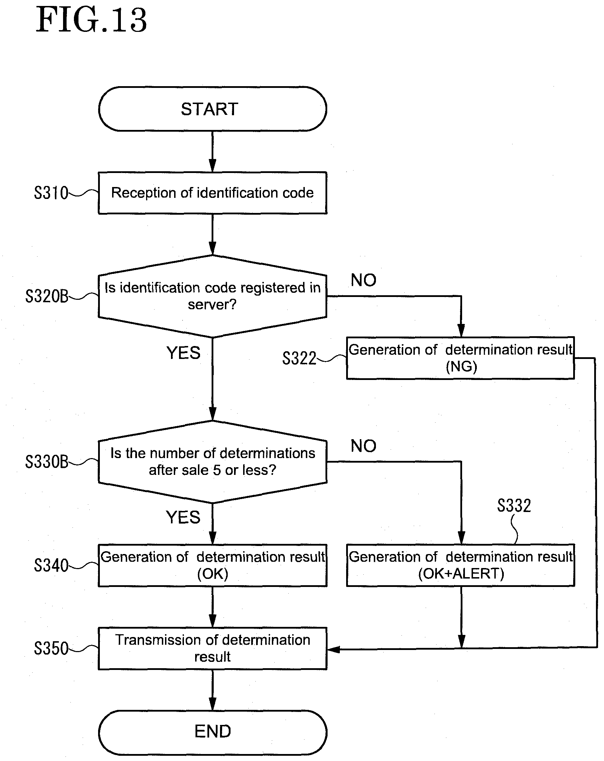

FIG. 13 is a flowchart of a determination process in the management server 100 of the determination system according to the embodiment of the present invention. In FIG. 13, the first condition is that the received identification code 800 is registered, and the second condition is that the number of determinations after the sale of the object 700 is 5 times or less.

First, the receiving part 140 of the management server 100 receives the identification code 800 transmitted by the second information communication terminal 300 (step S310). Next, the determination part 110 searches the storage part 120 and performs a first determination as to whether or not the identification code 800 is registered (step S320B). That is, the determination part 110 collates the received identification code 800 with the database stored in the storage part 120. When the identification code 800 is not registered, the determination part 110 generates a determination result (determination result NG) indicating that the identification code 800 is not registered (step S322B). On the other hand, when the identification code 800 is registered, the determination part 110 searches the storage part 120 for the number of determinations after sale, and performs a second determination as to whether or not the number of determinations after sale is 5 or less (step S330B). When the number of determinations after sale is 5 or less, the determination part 110 generates a determination result (determination result OK) indicating that the identification code 800 is registered (step S340B). Further, when the number of determinations after sale is more than 5, the determination part 110 generates a determination result (determination result OK + alert) indicating that the identification code 800 is registered and that the number of determinations after sale is large (step S332B). The transmitting part 150 transmits the determination result to the second information communication terminal 300.

When the determination of the determination system 10 is used in the manufacturing process and the distribution process of the object 700, it is difficult to determine whether the determination in the manufacturing process and the distribution process or the determination by the duplicated identification label 500 or identification code 800 merely by the total number of determinations. In that case, the number of determinations in the manufacturing process and the distribution process can be excluded by setting the number of determinations after the sale of the object 700. Therefore, if the number of determinations after sale is abnormally large, it is highly possible that the determination is repeated with the identification label 500 or identification code 800 duplicated after the sale of the object 700. The determination system 10 can detect the determination by the duplicated identification label 500 or identification code 800 by comparing the specific numerical values of the parameters included in the object information 900, and perform the determination of the object 700 with high determination accuracy.

### [3-3-3. Modification 3 of Determination Process in Management Server]

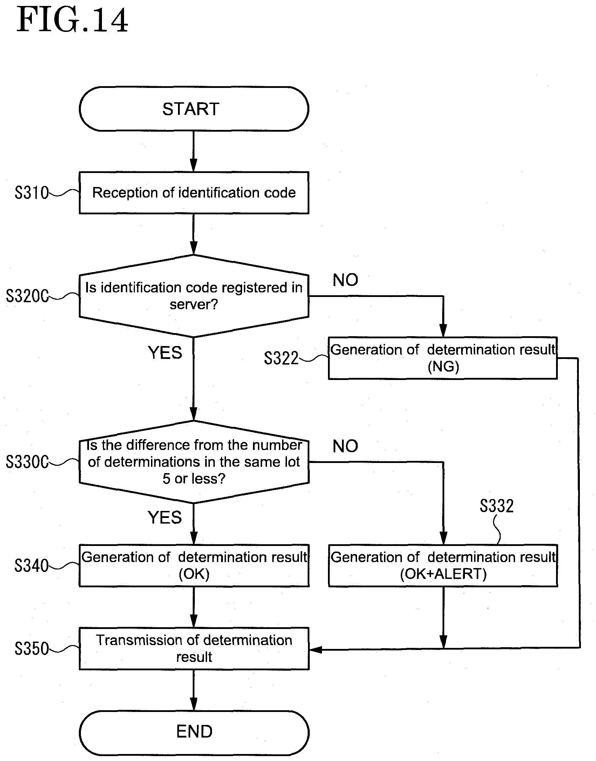

FIG. 14 is a flowchart of a determination process in the management server 100 of the determination system according to the embodiment of the present invention. In FIG. 14, the first condition is that the received identification code 800 is registered, and the second condition is that the difference from the average value of the number of determinations of the object 700 in the same lot number is 5 times or less.

First, the receiving part 140 of the management server 100 receives the identification code 800 transmitted by the second information communication terminal 300 (step S310). Next, the determination part 110 searches the storage part 120 and performs a first determination as to whether or not the identification code 800 is registered (step S320C). That is, the determination part 110 collates the received identification code 800 with the database stored in the storage part 120. When the identification code 800 is not registered, the determination part 110 generates a determination result (determination result NG) indicating that the identification code 800 is not registered (step S322C). On the other hand, when the identification code 800 is registered, the processing part 130 searches the storage part 120 for the object 700 having the same lot number, and generates an average value of the number of determinations of the object 700 in the same lot number. Based on the generated average value, the determination part 110 performs a second determination as to whether or not the difference between the number of determinations of the identification code 800 and the average number of determinations in the same lot number is 5 or less (step S330C). When the difference between the number of determinations of the identification code 800 and the average value of the number of determinations in the same lot number is 5 or less, the determination part 110 generates a determination result (determination result OK) indicating that the identification code 800 is registered (step S340C). When the difference between the identification code 800 and the average value is more than 5 times, the determination part 110 generates a determination result (determination result OK + alert) indicating that the number of determinations is large, including that the identification code 800 is registered (Step S332C). The transmitting part 150 transmits the determination result to the second information communication terminal 300.

Despite the same lot number, the identification code 800 having a large number of determinations is likely to be repeatedly determined by the duplicated identification label 500 or identification code 800. The determination system 10 can detect the determination by the duplicated identification label 500 or identification code 800 by comparing the specific numerical values of the parameters included in the object information 900, and perform the determination of the object 700 with high determination accuracy.

### <Second Embodiment

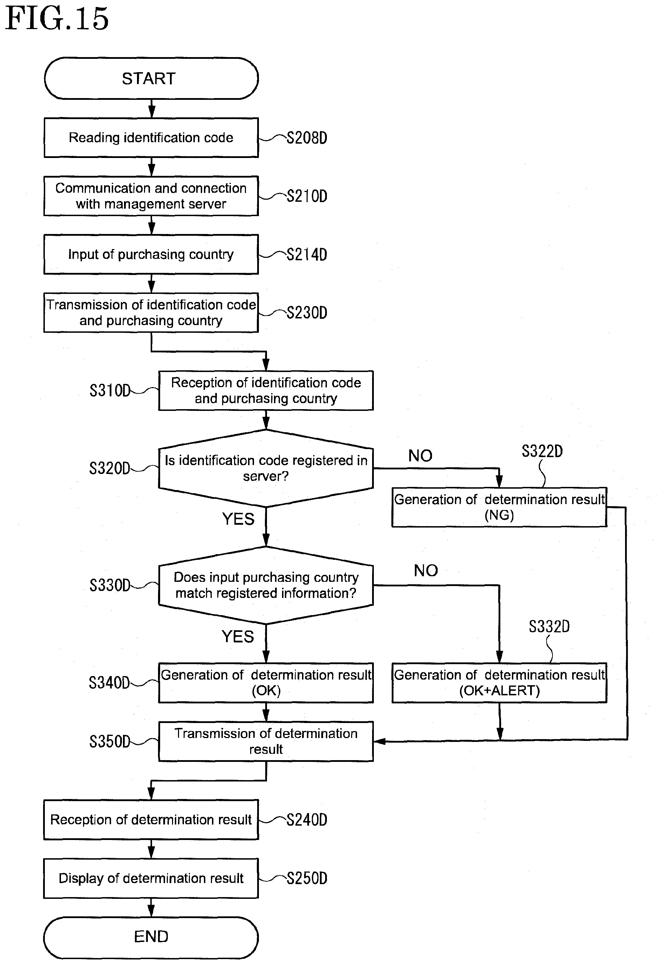

A determination system 20 according to an embodiment of the present invention is described with reference to FIG. 15.

FIG. 15 is a flowchart when determining the object 700 of the determination system 20 according to the embodiment of the present invention. The configuration of the determination system 20 can be the same as that of the determination system 10 described in the First Embodiment. That is, the determination system 20 includes the management server 100, the first information communication terminal 200, and the second information communication terminal 300. Hereinafter, it is explained that the identification code 800 of the object 700 is registered in the management server 100, that is, the identification code 800 is stored in the storage part of the management server 100. The identification code 800 of the object 700 can be registered by using the first information communication terminal as in the First Embodiment.

First, the user reads the identification code 800 and the URL information from the identification label 500 using the reading device of the second information communication terminal 300 (step S208D). Next, the second information communication terminal 300 communicates and connects with the management server 100 via the network 400 based on the read URL information (step S210D). Next, the user inputs information on the country in which the object 700 was purchased (purchasing country information) into the second information communication terminal 300 (step S214D). The second information communication terminal 300 transmits the read identification code 800 and the input purchasing country information to the management server 100 (step S230D).

Next, the receiving part 140 of the management server 100 receives the identification code 800 and the purchasing country information transmitted by the second information communication terminal 300 (step S310D). The determination part 110 searches the storage part 120 and performs a first determination as to whether or not the identification code 800 is registered (step S320D). When the identification code 800 is not registered, the determination part 110 generates a determination result (determination result NG) indicating that the identification code 800 is not registered (step S322D). On the other hand, when the identification code 800 is registered, the determination part 110 searches the selling country information of the object 700 from the storage part 120, and performs a second determination as to whether or not the selling country information and the received purchasing country information match. (step S330D). When the selling country information and the purchasing country information match, the determination part 110 generates a determination result (determination result OK) indicating that the identification code 800 is registered (step S340D). When the selling country information and the purchasing country information do not match, the determination part 110 generates a determination result (determination result OK + alert) indicating that the selling country is different, including that the identification code 800 is registered (step S332D). The transmitting part 150 transmits the determination result to the second information communication terminal 300 (step S350).

Next, the second information communication terminal 300 receives the determination result of the object 700 from the management server 100 via the network 400 (step S240D). Further, the second information communication terminal 300 displays the determination result of the object 700 on the screen (step S250D).

In the present embodiment, the user inputs the information of the object 700 into the second information communication terminal 300, and performs a second determination based on the information. Therefore, since it is based not only on the identification code 800 but also on the information of the object 700 actually distributed, the determination accuracy of the object 700 can be further improved. The second condition of the second determination of the present embodiment is not limited to the purchasing country. For example, a color, a material, a shape, a size, etc. of the object 700 may be used as the second condition.

### <Third Embodiment

### [1. Use of Determination System by Smartphone]

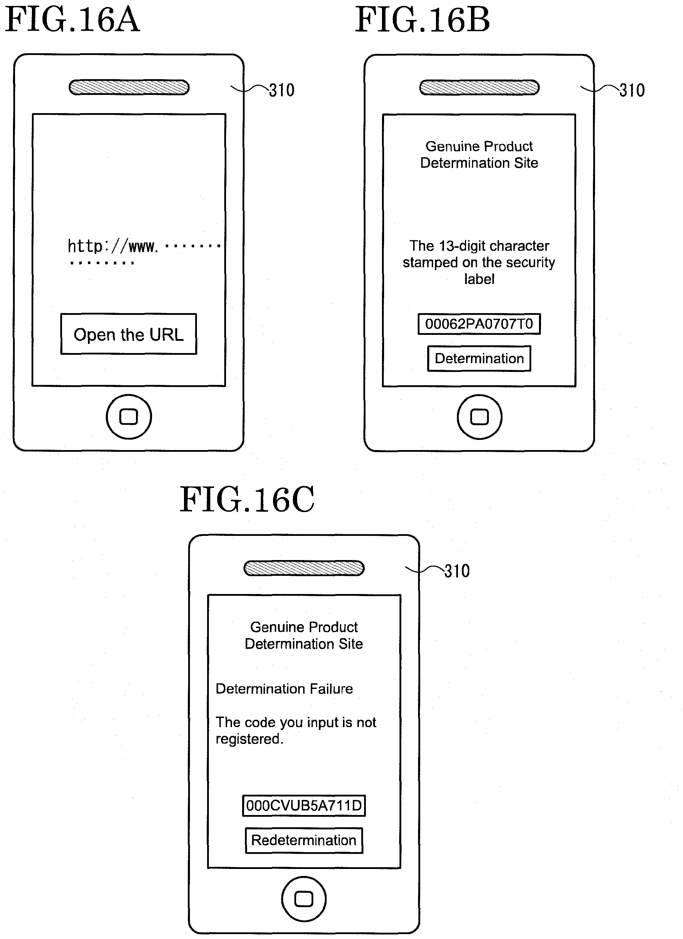

A determination system 30 according to an embodiment of the present invention is described with reference to FIGS. 16A to 17B. Specifically, the determination system 30 uses the smartphone 310 as the second information communication terminal 300 to determine the authenticity of the object 700.

FIG. 16A is a screen of a smartphone 310 after the identification label 500 of the object 700 is imaged by a camera built in the smartphone 310. The identification label 500 includes not only the identification code 800 but also the URL of the determination site. Further, the smartphone 310 has a program installed in which the URL is displayed when the identification label 500 is imaged by the camera. Therefore, in FIG. 16A, the URL of the determination site included in the identification label 500 is displayed.

When the URL is opened, the smartphone 310 communicates and connects with the management server 100 and displays the determination site on the screen of the smartphone 310 (FIG. 16B). Further, the identification code 800 included in the identification label 500 is also automatically displayed on the screen. This saves the user the trouble of inputting the identification code 800.

When the determination button is touched, the management server 100 counts the number of determinations and determines whether or not the identification code 800 is registered. When the identification code 800 is not registered, the management server 100 generates a determination result (determination result NG) indicating that the identification code 800 is not registered, and transmits the determination result NG to the smartphone 310. Then, the determination result NG is displayed on the screen of the smartphone 310 (FIG. 16C).

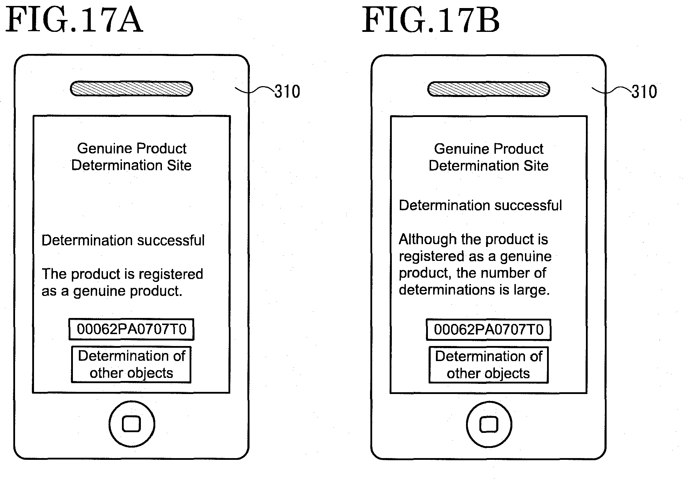

On the other hand, when the identification code 800 is registered, the management server 100 determines whether or not the number of determinations this time is 5 or less. When the number of determinations is 5 or less, the management server 100 generates a determination result (determination result OK) indicating that the identification code 800 is registered, and transmits the determination result OK to the smartphone 310. Then, the screen of the determination result OK is displayed on the screen of the smartphone 310 (FIG. 17A). Further, when the number of determinations is more than 5, the management server 100 generates a determination result (determination result OK + alert) indicating that the number of determinations is large, including that the identification code 800 is registered, and the determination result OK + alert is displayed on the screen of the smartphone 310 (FIG. 17B).

The user can easily determine the authenticity of the object 700 by using the determination site from the smartphone 310. Further, the user can confirm from the number of determinations displayed in the determination result whether or not the identification label 500 or identification code 800 attached to the object 700 is duplicated. Therefore, the determination accuracy of the authenticity determination of the object 700 can be improved.

### [2. Information Collection by User Evaluation]

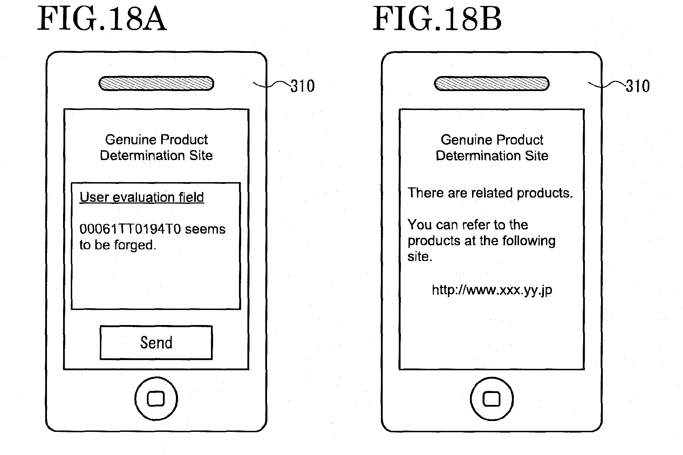

By collecting information from the user, the determination system 30 can further improve the determination accuracy of the authenticity determination of the object 700. FIG. 18A is a screen of the smartphone 310 on which the determination site is displayed. As shown in FIG. 18A, a user evaluation field may be provided in the determination site. The user can input information about the object 700 in the user evaluation field, and the input information is transmitted to the management server 100 and managed by the management server 100. When the user knows the information related to the counterfeit product of the object 700, it is effective because the information related to the counterfeit product can be provided through the user evaluation field and the information related to the counterfeiting of the identification code 800 can be collected. Although not shown in the figures, the user of the smartphone 310 may be able to view the evaluation of another person. In this way, the user can be provided with a warning concerning counterfeiting of the identification code 800.

### [3. Recommendation Service for Related Products]

Further, the determination system 30 can also recommend products related to the object 700 owned by the user. FIG. 18B is a screen of the smartphone 310 on which the determination site is displayed. As shown in FIG. 18B, products related to the object 700 can be displayed on the determination site. The URL address may be displayed on the determination site, and the site of the related products may be opened by clicking the URL address. In addition, photographs or videos of the related products may be displayed. In this way, the manufacturer can introduce the related products to the user, and the user can also obtain the information of the related products through the determination site.

### <Fourth Embodiment

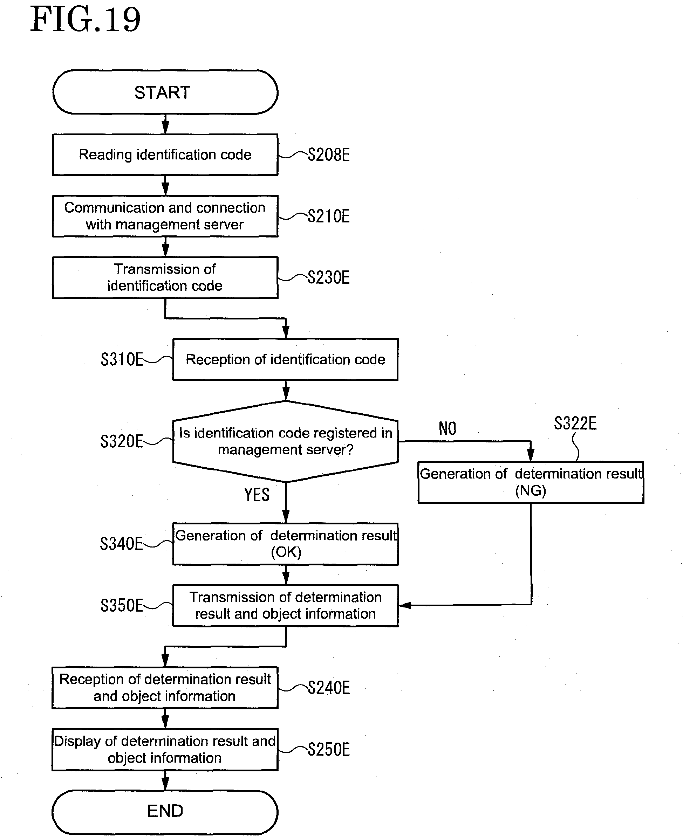

A determination system 40 according to an embodiment of the present invention is described with reference to FIG. 19.

FIG. 19 is a flowchart when determining the object 700 of the determination system 40 according to the embodiment of the present invention. The configuration of the determination system 40 can be the same as that of the determination system 10 described in the First Embodiment. That is, the determination system 40 includes the management server 100, the first information communication terminal 200, and the second information communication terminal 300. Hereinafter, it is explained that the identification code 800 of the object 700 is registered in the management server 100, that is, the identification code 800 is stored in the storage part of the management server 100. The identification code 800 of the object 700 can be registered by using the first information communication terminal 200 as in the First Embodiment.

First, the user reads the identification code 800 and the URL information from the identification label 500 using the reading device of the second information communication terminal 300 (step S208E). Next, the second information communication terminal 300 communicates and connects with the management server 100 via the network 400 based on the read URL information (step S210E). Further, the read identification code 800 is transmitted to the management server 100 (step S230E).

Next, the receiving part 140 of the management server 100 receives the identification code 800 transmitted by the second information communication terminal 300 (step S310E). The determination part 110 searches the storage part 120 and performs a first determination as to whether or not the identification code 800 is registered (step S320E). That is, the determination part 110 collates the received identification code 800 with the database stored in the storage part 120. When the identification code 800 is not registered, the determination part 110 generates a determination result (determination result NG) indicating that the identification code 800 is not registered (step S322E). On the other hand, when the identification code 800 is registered, the processing part 130 generates a determination result (determination result OK) indicating that the identification code 800 is registered (step S340E). The transmitting part 150 transmits the determination result and a part of the object information 900 to the second information communication terminal 300 (step S350E). It is preferable that the part of the object information 900 to be transmitted includes the characteristics of the object 700. The part of the object information to be transmitted is, for example, a color, a material, a size, or a shape of the object 700, a photograph of the object 700, or the like, but not limited to this.

Next, the second information communication terminal 300 receives the determination result of the object 700 and the part of the object information 900 from the management server 100 via the network 400 (step S240E). In addition, the second information communication terminal 300 displays the determination result of the object 700 and the part of the object information 900 on the screen (step S250E).

In the present embodiment, not only the determination of the identification code 800 but the user can also determine the object 700 while checking the object information 900 displayed on the second information communication terminal 300. Therefore, since it is based not only on the identification code 800 but also on the information of the actual object 700, the determination accuracy of the object 700 can be further improved.

In the First to Fourth embodiments, although the mode in which the user holding the object 700 uses the second information communication terminal 300 is described, the configuration in which the determination system is used is not limited to this. For example, a user who owns the object 700 can inquire to the manufacturer, and the manufacturer can use the second information communication terminal 300 to inform the user of the determination result. In that case, the user may contact the manufacturer with the identification code 800 or the object information by telephone or the like, or the user may take a picture of the object 700 or the identification code 800 with a camera and send the manufacturer a photograph or a video of the object 700 or the identification code 800.

### <Fifth Embodiment

In the present embodiment, a program that can be used in the determination system is described.

### [1. Program for Registering Identification Code]

A registration process of the manufacturing information and the identification code 800 can be performed by using a program running on the first information communication terminal 200. Hereinafter, a method of registering the manufacturing information and the identification code 800 of a plurality of objects 700 by using the manufacturing information input program is described.

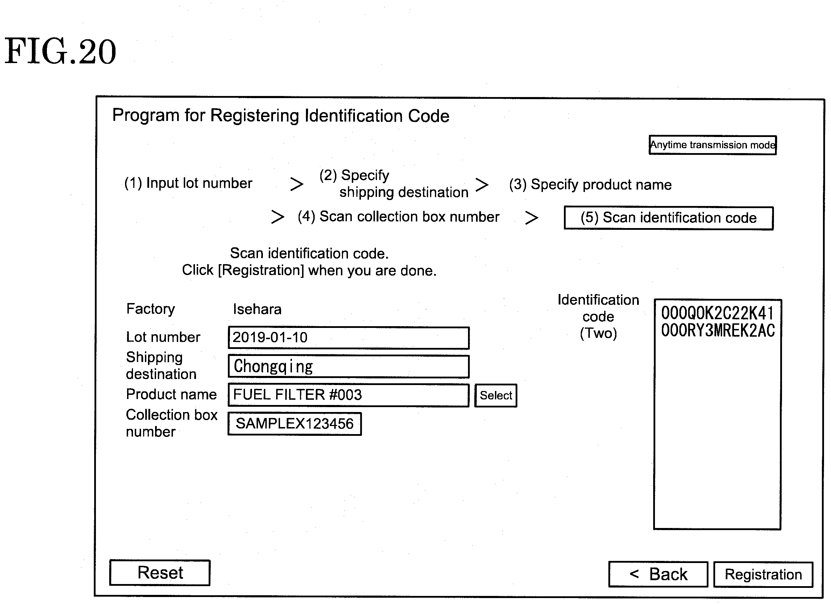

FIG. 20 is a display screen of the first information communication terminal 200 of the determination system 10 according to the embodiment of the present invention. Specifically, FIG. 20 is a display screen of the first information communication terminal 200 in a state where the manufacturing information input program is operated. The manufacturing information input program is installed in the first information communication terminal 200. In the manufacturing information input program shown in FIG. 20, it is possible to input manufacturing information of the lot number, shipping destination, product name, and collection box number of the object 700. In FIG. 20, "2019-01-10", "Chongqing", "FUEL FILTER # 003", and "SAMPLEX123456" are input in the columns "lot number", "shipping destination", "product name", and "collection box number", respectively, and are displayed on the screen of the first information communication terminal 200. This manufacturing information may be directly input, or be input by selecting an item from the selection button. Further, the manufacturing information may be input by reading a barcode which is converted from the manufacturing information.

The manufacturing information may be input by selecting from a master registration which is prepared with a plurality of sheets in advance. The manufacturing information may also include a photograph of the object 700 for visual comprehension.

Further, in the manufacturing information input program shown in FIG. 20, the identification code 800 of each of the plurality of objects 700 can be input. The identification code 800 may be directly input. Furthermore, the identification code 800 can also be input by reading the identification label 500 attached to the object 700. For example, the character string 503 of the identification label 500A shown in FIG. 2A is imaged by the camera or scanner of the first information communication terminal 200, OCR (Optical Character Recognition) processing is performed, and the identification code 800 can be read and input. In FIG. 20, "OOOQOK2C22K41" and "000RY3MEREK2AC" are input for a plurality of identification codes 800 in the "identification code" column and are displayed on the screen of the first information communication terminal 200.

When the input of the manufacturing information of the object 700 and the identification code 800 is completed, the manufacturing information input program generates data including the input manufacturing information for each of the identification codes 800, and the data is transmitted to the management server 100. In the management server 100, the identification code 800 and the manufacturing information are associated and registered based on the received data.

In the manufacturing input information program according to the present embodiment, the same manufacturing information can be collectively registered for a plurality of identification codes 800. Therefore, the work efficiency in the registration work of the identification code 800 is improved.

Although the registration process of the manufacturing information and the identification code 800 in the manufacturing process is described above, the registration process using the program is not limited to the manufacturing process. For example, in the distribution process, the reception/shipment information and the identification code 800 can be registered by using the reception/shipment information input program. Further, in the sales process, the sales information and the identification code 800 can be registered by using the sales information input program.

### [2. Program for Inquiring Determination status]

A program running on the second information communication terminal 300 can be used to perform an inquiry process of object information or a determination status. Hereinafter, a method of inquiring the object information and the determination status of the object 700 by using the determination status inquiry program is described.

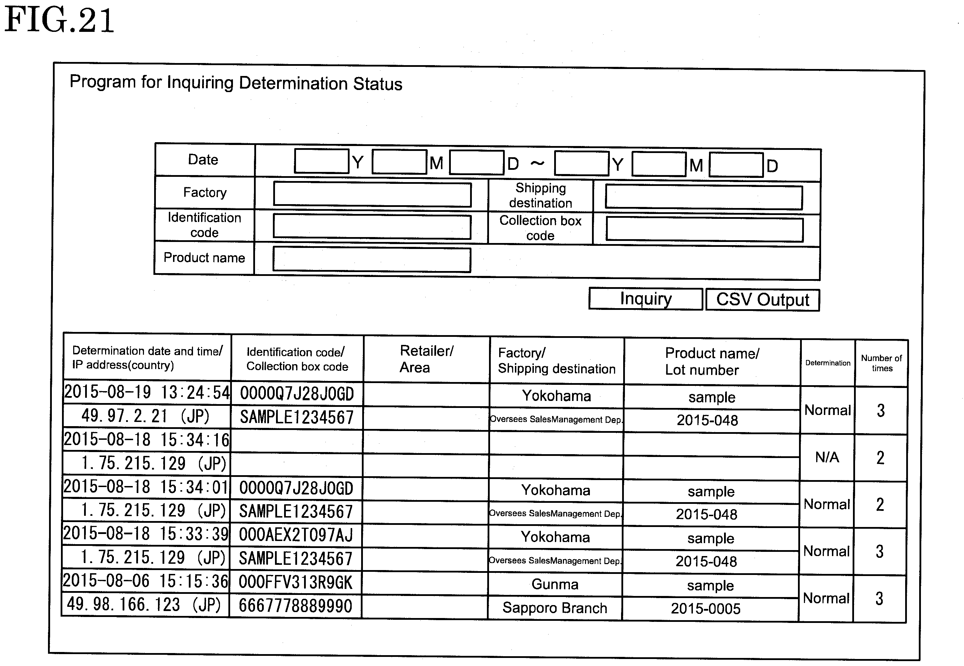

FIG. 21 is a display screen of the second information communication terminal 300 of the determination system 40 according to the embodiment of the present invention. Specifically, FIG. 21 is a display screen of the computer 320 used as the second information communication terminal 300 in a state where the determination status inquiry program is operated. The determination status inquiry program that can use the determination system 40 is installed in the computer 320. As shown in FIG. 21, a date, a factory, an identification code, a product name, a shipping destination, and a collection box code can be input in the determination status inquiry program, and the object information 900 of the object 700 can be searched from this input information. Further, when the object 700 is searched using the determination status inquiry system, the computer 320 communicates and connects with the management server 100 and receives the object information 900 of the object 700 or the like. For example, the object information 900 of the object 700, such as the determination date and time, the IP address (country) of the access source to the determination site, the identification code, the collection box code, the purchase destination, the region, the factory, the shipping destination, the product name, the lot number, the determination status, and the number of determinations is displayed on the screen of the computer 320.

The user can confirm the determination status of the purchaser of the object 700 by using the determination status inquiry program using the computer 320. For example, when the number of determinations of a certain identification code 800 is abnormally large, the user can determine that the identification code 800 is a duplicate. Therefore, the determination accuracy of authenticity determination of the object 700 can be improved.

### [3. Program for Inquiring Distribution Status of Object]

The distribution status of the object 700 can be confirmed by using the program operating on the second information communication terminal 300. In the following, a method of inquiring the distribution status of the object 700 using the object distribution status inquiry program is described.

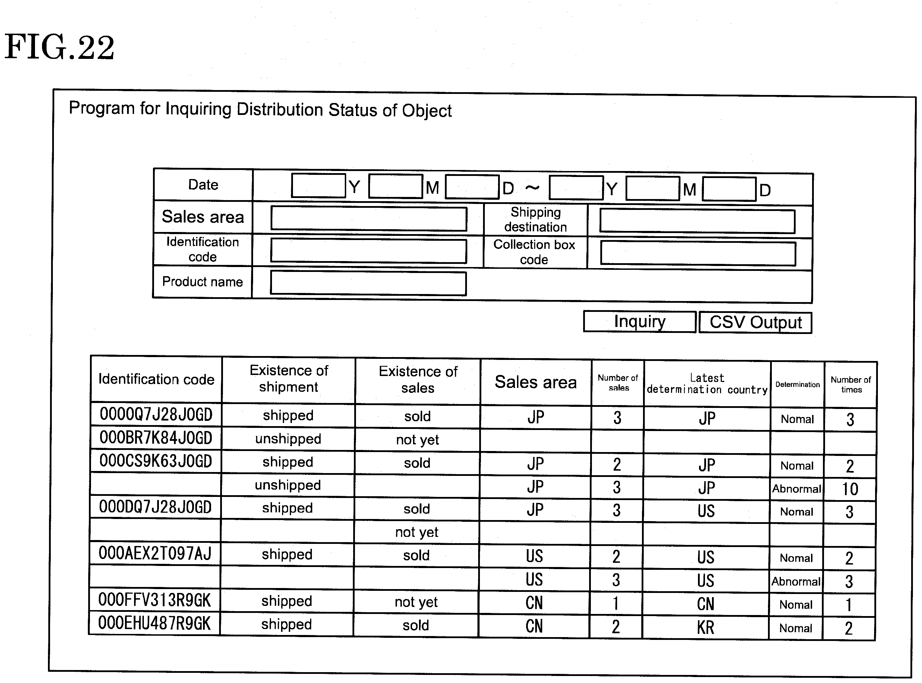

FIG. 22 is a display screen of the second information communication terminal 300 of the determination system 40 according to the embodiment of the present invention. Specifically, FIG. 22 is a display screen of the computer 320 used as the second information communication terminal 300 in a state where the object distribution status inquiry program is operated. The object distribution status inquiry program that can use the determination system 40 is installed in the computer 320. As shown in FIG. 22, in the object distribution status inquiry program, a date, a factory, an identification code, a product name, a shipping destination, and a collection box code can be input, and the object information 900 can be searched from this input information. Further, when the object 700 is searched using the object distribution status inquiry system, the computer 320 communicates and connects with the management server 100 and receives the object information 900 of the object 700 or the like. For example, the object information 900 of the object 700, such as the identification code, the presence/absence of shipment, the presence/absence of sale, the sales area, the number of sales, the latest determination country, the determination status, and the number of determinations is displayed on the screen of the computer 320. The object information 900 displayed on the screen in the object distribution status inquiry program is not limited to these.

The manufacturer can confirm the distribution status of the object 700 by using the object distribution status inquiry program using the computer 320. That is, the traceability of the object 700 can be performed by using the object distribution status inquiry program. For example, when a certain identification code 800 is sold many times, the object 700 to which the identification code 800 is attached is considered to be an object that is distributed in the market as a used item and is in high demand by users. Therefore, the manufacturer can adjust the production amount of the object 700 based on the determination result of the object distribution status inquiry program. Further, in the determination result of the object distribution status inquiry program, it is possible to confirm the country or region where the object 700 is widespread from the sales area of the object 700 or the like. Therefore, the manufacturer can use the determination result of the object distribution status inquiry program as a determination material for the future sales strategy of the object 700. Further, since the object distribution status inquiry program can confirm whether or not the object 700 is shipped or sold, the object distribution status inquiry program can also be used for an inventory of the object 700.

### <Sixth Embodiment>

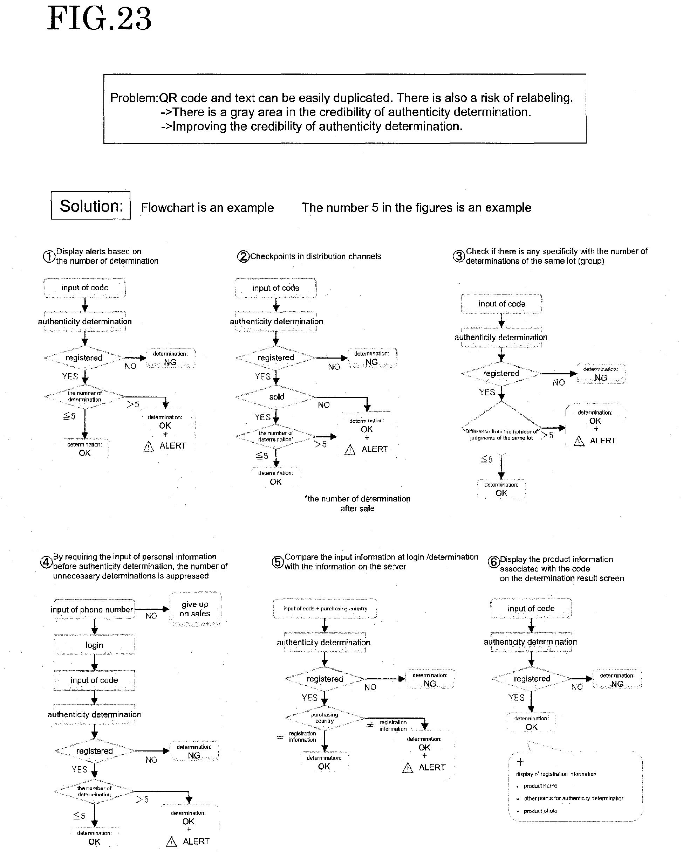

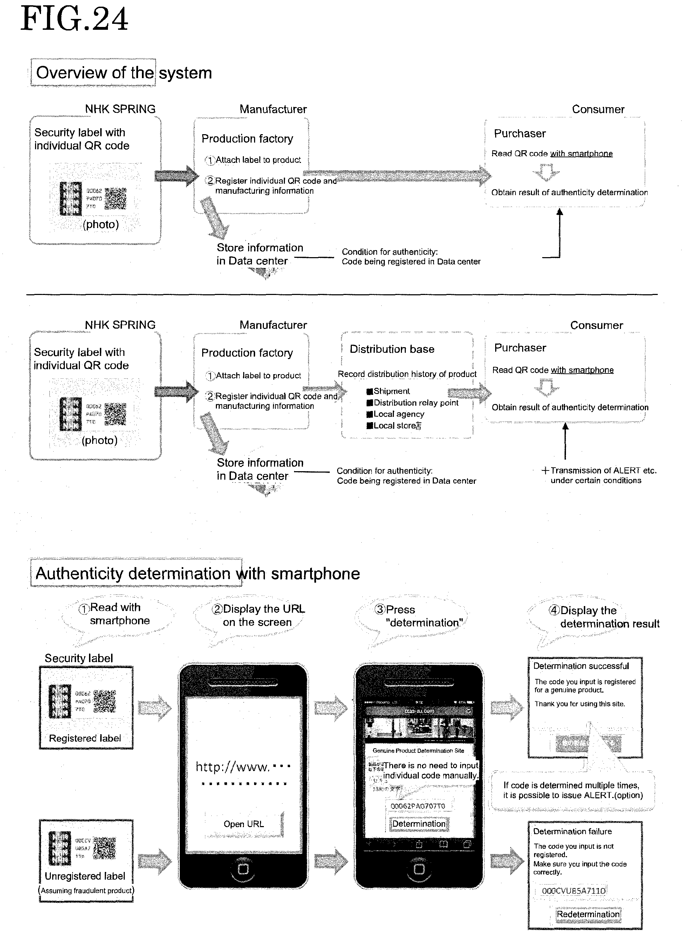

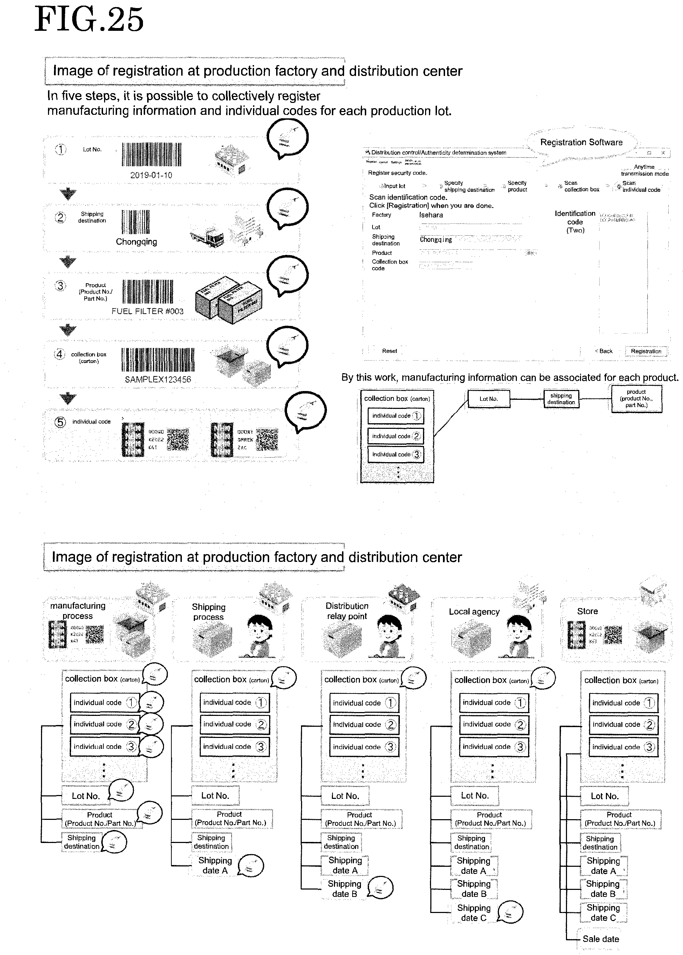

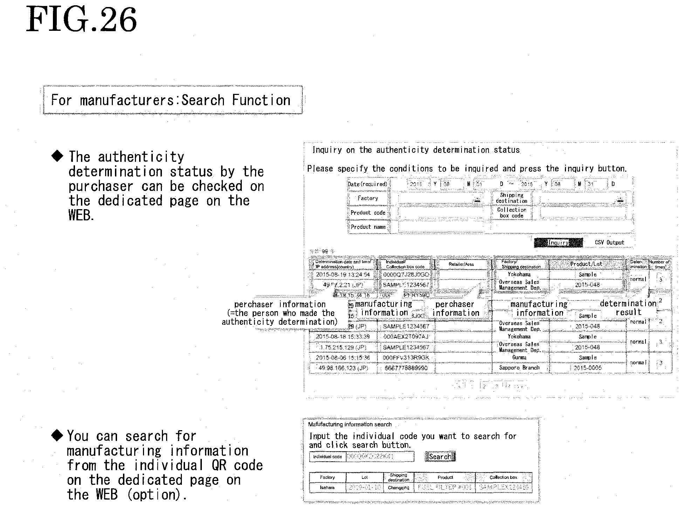

Examples of the determination system (an outline, a flowchart, a configuration diagram, etc.) according to an embodiment of the present invention are shown in FIGS. 23 to 26. The determination system according to the embodiment of the present invention can also be understood from FIGS. 23 to 26.

Each of the embodiments described above as an embodiment of the present invention can be appropriately combined and implemented as long as they do not contradict each other. Further, additions, deletion, or design changes of constituent elements based on the respective embodiments are also included within the scope of the present invention as long as the gist of the present invention is provided.

Other effects of the action which differ from those brought about by each of the embodiments described above but which are apparent from the description herein or which can be readily predicted by those skilled in the art, are naturally understood to be brought about by the present invention.

## Claims

1. A determination system comprising:
a management server configured to determine an object and generate a determination result;
a first information communication terminal configured to transmit an identification code and an object information of the object to the management server; and
a second information communication terminal configured to transmit the identification code of the object to the management server and receive the determination result,
wherein the management server comprises:
a receiving part configured to receive the identification code and the object information;
a processing part configured to associate the identification code transmitted from the first information communication terminal with the object information;
a storage part configured to store the associated identification code and the object information as a database;
a determination part configured to perform a first determination in which the identification code transmitted from the second information communication terminal is collated with the database, perform a second determination in which a parameter included in the object information associated with the collated identification code is compared with a setting condition, and generate the determination result based on the first determination and the second determination; and
a transmitting part configured to transmit the determination result to the second information communication terminal.

2. A determination system comprising:
a management server configured to determine an object and generate a determination result; and
a second information communication terminal configured to transmit an identification code of the object to the management server and receive the determination result,
wherein the management server comprises:
a storage part configured to store the identification code and an object information associated with the identification code as a database;
a determination part configured to perform a first determination in which the identification code transmitted from the second information communication terminal is collated with the database, perform a second determination in which a parameter included in the object information associated with the collated identification code is compared with a setting condition; and
a transmitting part configured to transmit the determination result to the second information communication terminal.

3. The determination system according to claim 1 or claim 2, wherein the determination result includes a credit rating of the first determination calculated based on the second determination.

4. The determination system according to claim 1 or claim 2, wherein when the parameter does not match the setting condition in the second determination, the determination result including an alert is generated.

5. The determination system according to claim 1 or claim 2, wherein when a numeral value included in the parameter exceeds a numeral value included in the setting condition in the second determination, the determination result including an alert is generated.

6. The determination system according to claim 1 or claim 2, wherein the parameter is one or more selected from a number of determinations, a number of sales, and a period from a sale date.

7. The determination system according to any one of claims 1 to 6, wherein the second information communication terminal is provided with a reading device to read the identification code.

8. The determination system according to claim 7, wherein the reading device reads a URL information attached to the object and enables the second information communication terminal to access a determination site.

9. A determination device comprising:
a receiving part configured to receive an identification code of an object;
a storage part configured to store the identification code and an object information associated with the identification code as a database;
a determination part configured to perform a first determination in which the received identification code is collated with the database, perform a second determination in which a parameter included in the object information associated with the collated identification code is compared with a setting condition, and generate a determination result based on the first determination and the second determination; and
a transmitting part configured to transmit the determination result.

10. The determination device according to claim 9, wherein the determination result includes a credit rating of the first determination calculated based on the second determination.

11. The determination device according to claim 9, wherein when the parameter does not match the setting condition in the second determination, the determination result including an alert is generated.

12. The determination device according to claim 9, wherein when a numeral value included in the parameter exceeds a numeral value included in the setting condition in the second determination, the determination result including an alert is generated.

13. The determination device according to claim 9, wherein the parameter is one or more selected from a number of determinations, a number of sales, and a period from a sale date.

14. A determination method comprising:
performing a first determination in which an identification code of an object is collated with a database;
performing a second determination in which a parameter included in an object information associated with the collated identification code is compared with a setting condition; and
generating a determination result based on the first determination and the second determination.

15. The determination method according to claim 14, wherein the determination result includes a credit rating of the first determination calculated based on the second determination.

16. The determination method according to claim 14, wherein when the parameter does not match the setting condition in the second determination, the determination result including an alert is generated.

17. The determination method according to claim 14, wherein when a numeral value included in the parameter exceeds a numeral value included in the setting condition in the second determination, the determination result including an alert is generated.

18. The determination method according to claim 14, wherein the parameter is one or more selected from a number of determinations, a number of sales, and a period from a sale date.

19. A program executed by a determination device to determine an object, comprising the steps of:
performing a first determination in which an identification code of an object is collated with a database;
performing a second determination in which a parameter included in an object information associated with the identification code that is collated with the database is compared with a setting condition; and
generate a determination result based on the first determination and the second determination.

20. The program according to claim 19, wherein the determination result includes a credibility of the first determination that is calculated on the second decision.

21. The program according to claim 19, wherein when the parameter does not match the setting condition in the second determination, the determination result including an alert is generated.

22. The program according to claim 19, wherein when a numeral value included in the parameter exceed a numeral value included in the setting condition in the second determination, the determination result including an alert is generated.

23. The program according to claim 19, wherein the parameter is one or more selected from a number of determinations, a number of sales, and a period from a sales date.
